(19) Europäisches Patentamt
European Patent Office
Office européen des brevets

(11) **EP 3 504 817 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **17777784.4**

(22) Anmeldetag: **16.08.2017**

(51) Internationale Patentklassifikation (IPC):
**H04L 1/00** (2006.01)    **H04B 1/713** (2011.01)
**H04B 1/7143** (2011.01)    **H04L 1/20** (2006.01)
**H04B 1/715** (2011.01)

(52) Gemeinsame Patentklassifikation (CPC):
**H04B 1/715; H04B 1/713; H04L 1/0001;**
**H04L 1/004; H04L 1/20;** H04B 2001/7154

(86) Internationale Anmeldenummer:
**PCT/EP2017/000983**

(87) Internationale Veröffentlichungsnummer:
**WO 2018/041392 (08.03.2018 Gazette 2018/10)**

(54) **VERFAHREN ZUR SELEKTION VON FREQUENZKANÄLEN**

METHOD FOR SELECTING FREQUENCY CHANNELS

PROCÉDÉ DE SÉLECTION DE CANAUX DE FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2016   DE 102016010432**

(43) Veröffentlichungstag der Anmeldung:
**03.07.2019   Patentblatt 2019/27**

(73) Patentinhaber: **Diehl Metering Systems GmbH**
**90451 Nürnberg (DE)**

(72) Erfinder:
• **PETKOV, Hristo**
  **90425 Nürnberg (DE)**
• **KAUPPERT, Thomas**
  **90455 Nürnberg (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
EP-A1- 2 642 706    US-A1- 2006 013 172
US-B2- 8 958 456

• HANZO L ET AL: "Burst-by-burst adaptive wideband wireless video telephony", COMMUNICATIONS AND VEHICULAR TECHNOLOGY, 2000. SCVT-200. SYMPOSIUM ON OCT 19, 2000, PISCATAWAY, NJ, USA,IEEE, 1. Januar 2000 (2000-01-01), Seiten 215-232, XP010542756, ISBN: 978-0-7803-6684-8
• Shreharsha Rao: "Implementing a Bidirectional Frequency Hopping Application With TRF6903 and MSP430", Application Report SWRA041 - September, 1 January 2004 (2004-01-01), XP055363651, Retrieved from the Internet: URL:http://citeseerx.ist.psu.edu/viewdoc/download;jsessionid=5E96A5B615A14C52279BCBD 6EBA72447?doi=10.1.1.372.1493&rep=rep1&type=pdf

**Beschreibung**

Die vorliegende Erfindung betrifft ein Verfahren zur Selektion von Frequenzkanälen in einem ein Frequenzsprungverfahren verwendenden Kommunikationssystems gemäß dem Oberbegriff des Anspruchs 1.

Technologischer Hintergrund

Kommunikationssysteme in denen eine Datenübertragung mittels Funk erfolgt, werden heutzutage in vielen Bereichen eingesetzt. Beispielsweise auf dem Gebiet der Intelligenten Verbrauchsmessgeräte, sogenannten Smart Metern. Hierbei handelt es sich um in einem Versorgungsnetz befindliche Verbrauchsmessgeräte, z. B. für Energie, Strom, Gas, Wasser oder dergleichen, die dem jeweiligen Anschlussbenutzer den tatsächlichen Verbrauch anzeigen und in einen gattungsgemäßen Kommunikationssystem eingebunden sind, um z. B. die erfassten Verbrauchsdaten an den Versorger zu übermitteln. Intelligente Verbrauchsmessgeräte haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können Versorgungsnetze wesentlich besser ausgelastet werden.

Intelligente Verbrauchsmessgeräte sind üblicherweise jeweils Wohneinheiten oder Wohnhäusern zugeordnet. Die dort anfallenden Verbrauchsdaten können beispielsweise in Form von Datenpaketen oder Teilen von Datenpaketen (sogenannten Hops) per Funk übertragen werden, z. B. im ISM (Industrial, Scientific, Medical)- oder SRD (Short Range Device)-Band-Frequenzbereich. Diese Frequenzbereiche haben den Vorteil, dass von den Betreibern lediglich eine allgemeine Zulassung der Frequenzverwaltung notwendig ist. Allerdings besteht das Problem, dass es aufgrund der Häufigkeit der Verwendung derartiger Frequenzbereiche für unterschiedlichste technische Einrichtungen, wie etwa Garagentorsteuerungen, Babyphones, Alarmanlagen, WLAN, Bluetooth, Rauchwarnmelder usw., oftmals zu Störungen kommen kann. Das Sammeln der Verbrauchsdaten per Funk erfolgt in der Regel entweder durch ortsfeste oder mobile Empfänger, sogenannte Datensammler oder Datenkonzentratoren, an denen die von den Verbrauchsmessgeräten bereitgestellten Verbrauchsdaten übertragen werden. Die Datensammler können die Daten anschließend weiter an eine übergeordnete Zentraleinheit, wie z. B. die Schaltzentrale des Versorgers übertragen.

Die Übertragung von Datenpaketen kann in einem Kommunikationssystem innerhalb eines Frequenzbandes auf mehreren Frequenzen bzw. Frequenzkanälen erfolgen (Frequenzsprungverfahren oder Frequency Hopping), um die Übertragungsqualität der Datenpakete zu verbessern. Hierbei besteht die Möglichkeit, gezielt Frequenzkanäle zu selektieren, d. h. gestörte Frequenzkanäle auszublenden und über ungestörte bzw. weniger gestörte Frequenzkanäle zu übertragen. Ein Frequenzkanalwechsel erfolgt gemäß dem Frequenzsprungverfahren, wenn die Datenübertragung auf einem Frequenzkanal gestört ist.

Vorzugsweise erfolgt ein Wechsel auf andere Frequenzkanäle automatisch mit dem sogenannten adaptiven Frequenzsprungverfahren. Durch das adaptive Frequenzsprungverfahren kann schnell auf gestörte Frequenzkanäle reagiert werden. Ferner wird bei einem Frequenzkanalwechsel von einem gestörten Frequenzkanal auf einen neuen ungestörten Frequenzkanal der neue Frequenzkanal durch Pseudozufallszahlen bestimmt. Aufgrund dieser zufälligen Auswahl des neuen Frequenzkanals kann es jedoch passieren, dass ein Frequenzkanal ausgewählt wird, der ebenfalls gestört ist oder dessen Übertragungsqualität sogar schlechter ist, als die des ursprünglichen Frequenzkanals.

Druckschriftlicher Stand der Technik

Ein Verfahren zur Selektion von Frequenzkanälen gemäß dem Oberbegriff des Anspruchs 1 ist bereits aus US 8,958,456 B2 bekannt. Die Übertragungsqualität der Frequenzkanäle wird bei diesem Verfahren bewertet und anhand der Bewertung eine Entscheidung für die Auswahl eines Frequenzkanals getroffen. Die Bewertung der Übertragungsqualität erfolgt bei diesem bekannten Verfahren Datenpaket-bezogen.

Aus US 2006/0013172 A1 ist ein Frequenzsprungverfahren bekannt, bei dem die Übertragungsqualität eines Kanals auf der Basis des RSSI der empfangenen Datenpakete erfolgt.

HANZO L et al.: "Burst-byburst adaptive wideband wireless video telephony", COMMUNICATIONS AND VEHICULAR TECHNOLOGY, 2000. SCVT-200. SYMPOSIUM ON OCT 19, 2000, PISCATAWAY, NJ, USA, IEEE, 1. Januar 2000 (2000-01-01), Seiten 215-232, XP010542756, ISBN: 978-0-7803-6684-8 offenbart, dass eine Bit-Fehlerrate in drahtlosen Kommunikationssystemen anhand eines Wahrscheinlichkeitsquotienten (Logarithmic Likelihood Ratio LLR) bestimmt und für eine Bewertung der Übertragungsqualität eines Frequenzkanals verwendet werden kann.

Aus der EP 2 642 706 A1 ist ein Verfahren zur Bewertung der Übertragungsqualität des Frequenzkanals bekannt, bei dem "Soft Values" des "Decoder Outputs" zur Schätzung der Kanalqualität herangezogen werden. Die Soft Values können hierbei dazu verwendet werden, eine Bit-Fehlerwahrscheinlichkeit zu berechnen.

Ein Verfahren zur Selektion von Frequenzkanälen eines Datenübertragungssystems ist ferner aus der DE 103 20 176 B3 bekannt. Bei dem Verfahren werden bei der Übertragung eines Datenpakets zwischen einem Sender und einem Empfänger die Übertragungsqualitäten der Frequenzkanäle ermittelt, indem die Datenpaket-Fehlerrate und/oder die Bit-Fehlerrate sowie die Feldstärke des Empfangssignals gemessen werden. Für die Selektionsentscheidung der Frequenzkanäle wird die ermittelte Feldstärke mit einer definierbaren Schwellenwertfeldstärke verglichen. Die Messung der Datenpaket-Fehlerrate und/oder die Bit-Fehlerrate sowie die Feldstärke des Empfangssignals erfolgt hierbei innerhalb definierter Sende-Zeitschlitze der messenden Einheit (Sender oder Empfänger), bei der nur jeweils ein Sender Datenpakete überträgt. Dadurch, dass die Sende-Zeitschlitze für alle Sender und Empfänger koordiniert werden müssen, ist das Verfahren aufwendig und störanfällig.

Aus US 2002/0136268 A1 ist ein Verfahren zum Betrieb eines Kommunikationsnetzwerkes bekannt. Das Kommunikationsnetzwerk verwendet ein Frequenzsprungverfahren, bei dem die Leistungsfähigkeit eines Kommunikations- bzw. Frequenzkanals anhand unterschiedlicher Methoden bewertet wird, um eine Auswahl des Kommunikationskanals durchzuführen. Beispielsweise wird ein spezielles Testpaket mit bekanntem Inhalt über den Kommunikationskanal gesendet, ein Stärkeindikator eines empfangenen Signals (RSSI, received signal strength indicator) ermittelt, eine Präambel-Korrelation anhand einer Präambel am Anfang des Datenpakets durchgeführt, ein Paket-Verlustverhältnis (PLR, packet loss ratio) bestimmt oder eine spezielle Prüfung durchgeführt, wie z. B. Titel-Fehlerprüfung (HEC, header error check), zyklische Redundanzprüfung (CRC, cyclic redundancy check) oder Vorwärts-Fehlerkorrektur (FEC, forward error correction), um die Leistungsfähigkeit des Kommunikationskanals zu testen.

Die US 2006/0133543 A1 offenbart ein drahtloses, ein Frequenzsprungverfahren verwendendes Kommunikationssystem, bei dem die Frequenzkanäle anhand des Signalstärkeindikators (RSSI) oder einem Paket-Fehlerverhältnis (PER, packet error ratio) bewertet und ausgewählt werden.

Ferner ist aus der US 2006/0013172 A1 eine Vorrichtung zum Kommunizieren über einen Funkkommunikationskanal bekannt, welche ein Frequenzsprungverfahren verwendet und hierbei eine Frequenzkanalmessung und Frequenzkanalauswahl anhand des Signalstärkeindikators (RSSI) eines auf dem Frequenzkanal empfangenen Datenpakets durchführt.

Aus der DE 10 2013 008 253 A1 ist ein Verfahren zum Dekodieren eines kodierten Datenpakets bekannt. Die Datenpakete werden hierbei derart kodiert, dass sie Fehlererkennungsbits (zyklische Redundanzprüf-Bits, CRC-Bits) und/oder Fehlerkorrekturbits (Vorwärtsfehlerkorrektur-Bits, FEC-Bits) enthalten. Der Empfänger umfasst ein Empfängermodul zum Empfangen der kodierten Datenpakete, einen Dekodierer zum Dekodieren der Datenpakete sowie ein LLR-Modul zum Bestimmen von LLR-Werten, sogenannten logarithmischen Wahrscheinlichkeitsverhältnis-Werten (log likelihood ratios) für kodierte Datenbits des Datenpakets.

Der LLR-Wert gibt hierbei die Wahrscheinlichkeit an, ob das jeweilige kodierte Datenbit gestört oder nicht. Anhand dieser LLR-Werte kann letztlich eine Vorauswahl getroffen werden, ob der Dekodierer die Datenbits dekodiert oder nicht. Anschließend kann der Dekodierer die nicht dekodierten Datenbits während des Dekodierens anhand der Fehlererkennungsbits und Fehlerkorrekturbits erkennen und korrigieren.

Rao S.: "Implementing a Bidirectional Frequency Hopping application with TRF6903 and MSP430", Texas Instrument, September 2004, Application Report, SWRA041 offenbart ein Frequenzsprungverfahren, bei dem Teile von Datenpaketen zufällig auf verschiedene Frequenzkanäle aufgeteilt und über diese übertragen werden.

Aufgabe der vorliegenden Erfindung

Ausgehend vom Stand der Technik besteht die Aufgabe der vorliegenden Erfindung darin, ein Verfahren zur Selektion von Frequenzkanälen zur Verfügung zu stellen, mit dem eine verbesserte Übertragungsqualität und Übertragungssicherheit ermöglicht wird.

Lösung der Aufgabe

Die vorstehende Aufgabe wird durch die gesamte Lehre des Anspruchs 1 sowie der nebengeordneten Ansprüche gelöst. Zweckmäßige Ausgestaltungen der Erfindung sind in den Unteransprüchen beansprucht.

Erfindungsgemäß wird ein Wahrscheinlichkeitsquotient WQ (d. h. ein LR, likelihood ratio) für die Wahrscheinlichkeit einer erfolgreichen Übertragung vor der Dekodierung durch den Empfänger ermittelt. Beispielsweise kann der Empfänger hierzu ein LLR-Modul zum Bestimmen des LLR-Wertes des Teils des Datenpakets aufweisen. Der Wahrscheinlichkeitsquotient WQ wird hierbei als Metrik zur Ermittlung des Störungszustandes eines Teils eines Datenpakets herangezogen, d. h. der Wahrscheinlichkeitsquotient WQ des Teils des Datenpakets dient z. B. als numerisches Maß für die Ermittlung des Störungszustandes des Teils des Datenpakets. In praktischer Weise kann somit die Bewertung der Übertragungsqualität des jeweiligen Frequenzkanals anhand des ermittelten Störungszustandes des Teils des Datenpakets bzw. der LLR-Werte erfolgen. Dadurch kann die Auswahl der Frequenzkanäle hinsichtlich ihrer Übertragungsqualität in besonderem Maße verbessert werden, wodurch sich die Übertragungsqualität und Übertragungssicherheit des Kommunikationssystems erheblich steigern lassen.

Der Wahrscheinlichkeitsquotient WQ kann bitweise, d. h. Bit für Bit, oder für eine festgelegte Anzahl an Bits des Teils des Datenpakets ermittelt werden. Beispielsweise kann das LLR-Modul für jedes übertragene Bit einen LLR-Wert ermitteln. Die derart ermittelten Wahrscheinlichkeitsquotienten WQ der Bits oder der festgelegten Anzahl an Bits kann dann als Metrik zur Ermittlung des Störungszustandes des jeweiligen Teils des Datenpakets herangezogen werden.

Zweckmäßigerweise wird die Signalleistung SL1 in einem Frequenz/Zeit-Block außerhalb der Übertragung des jeweiligen Datenpakets, d. h. das Signalrauschen außerhalb der Übertragung des Teils des Datenpakets, in dem betreffenden Frequenzkanal ermittelt. Die Signalleistung SL1, die in einem Frequenz/Zeit-Block außerhalb der Übertragung des jeweiligen Teils des Datenpakets ermittelt wird, kann beispielsweise durch ein Fremdsignal (Störsignal) und/oder durch Fading und/oder durch das Hintergrundrauschen begründet sein. Zudem kann auch die Signalleistung SL2 des sendenden Kommunikationsmoduls in einem Frequenz/Zeit-Block innerhalb der Übertragung des jeweiligen Teils des Datenpakets in dem betreffenden Frequenzkanal ermittelt werden. Dadurch, dass die Signalleistung SL1 außerhalb der Übertragung des Teils des Datenpakets ermittelt wird, kann bestimmt werden, ob sich ein Störer, d. h. beispielsweise eine fremde Signalübertragung, auf dem betreffenden Frequenzkanal befindet oder nicht. Auch ein hohes Signalrauschen auf dem Frequenzkanal lässt hierbei auf einen gestörten Frequenzkanal schließen. Ein niedriges Signalrauschen auf dem Frequenzkanal zeigt demgegenüber in der Regel einen ungestörten Frequenzkanal an. Daraus resultiert der Vorteil, dass der Sender und/oder Empfänger durch die Detektion der Signalleistung SL1 auf einem Frequenzkanal die Möglichkeit hat, zusätzlich zu prüfen, ob eine erfolgreiche Übertragung der Teile der Datenpakete auf diesem Frequenzkanal wahrscheinlich ist oder nicht. Beispielsweise kann der Datensammler eine Störung der Frequenzkanäle feststellen und anschließend dem Verbrauchsmessgerät die Information übertragen, ob der betreffende Frequenzkanal gestört ist oder nicht.

Vorzugsweise werden die Signalleistung SL1 außerhalb des Teils des Datenpakets und die Signalleistung SL2 während der Übertragung des Teils des Datenpakets in Relation zueinander gesetzt, um z. B. ein Signal-zu-Rausch-Verhältnis (signal-to-noise-ratio) oder ein Signal-zu-Interferenz-Verhältnis (signal-tointerference-ratio) zu bestimmen. Beispielsweise kann anhand des Signal-zu-Rausch-Verhältnisses der störende Einfluss des Signalrauschens auf die Übertragung des Teils des Datenpakets ermittelt und somit die Übertragungsqualität auf dem betreffenden Frequenzkanal bestimmt werden. Ferner kann dadurch ermittelt werden, ob der Frequenzkanal ein niedriges Signalrauschen aufgrund von Übertragungsproblemen oder Fading besitzt oder ob es sich um auftretende Störsignale handelt.

Ferner kann die Signalleistungen SL1 und/oder SL2 und/oder die Relation zwischen den Signalleistungen SL1 und SL2 zur Feinabstimmung des Wahrscheinlichkeitsquotienten WQ herangezogen werden. Beispielsweise kann der LLR-Wert mit der ermittelten Relation zwischen den Signalleistungen SL1 und SL2 skaliert werden, um z. B. das Signal-zu-Rausch- und/oder Signal-zu-Interferenz-Verhältnis auf dem jeweiligen Frequenzkanal mit in die Bewertung der Übertragungsqualität des jeweiligen Frequenzkanals mit einzubeziehen. Die Frequenzkanalauswahl wird dadurch in erheblichem Maße verbessert.

Vorzugsweise dient ein Mittelwert der Wahrscheinlichkeitsquotienten WQ der Bits oder einer festgelegten Anzahl von Bits eines Teils des Datenpakets als Metrik zur Ermittlung des Störungszustandes des jeweiligen Teils des Datenpakets. Dadurch kann in einfacher Weise eine Aussage über den Störungszustand des Teils des Datenpakets getroffen werden.

Der Störungszustand von Teilen des Datenpakets kann hierbei z. B. als prozentualer Wert, als Dezimalangabe oder als dualer Ausdruck, z. B. als binärer Zahlenausdruck "0" oder "1" oder als Entscheidungsausdruck "ja" oder "nein" angegeben werden.

In zweckdienlicher Weise kann ein Schwellenwert SW als Auswahlkriterium bzw. Qualitätsmerkmal für den Störungszustand von Teilen des Datenpakets definiert werden, wobei die Bewertung der Übertragungsqualität des jeweiligen Frequenzkanals anhand des Schwellenwertes SW erfolgt. Beispielsweise kann ein Teil eines Datenpakets mit 12 Bits, bei dem 3 Bits gut gewertet wurden (Bit 1) und 9 Bits abgewertet wurden (Bit 0), mit dem Ausdruck 25 % Bit 1 / 75 % Bit 0 bewertet werden, sodass der Störungszustand des Teils des Datenpakets bei 25 % liegt. Bei einem Schwellenwert SW = 50 % kann der Störungszustand des Teils des Datenpakets somit als "nein", "gestört" oder "0" angegeben werden. Demzufolge würde auch die Bewertung der Übertragungsqualität des Frequenzkanals anhand dieses Teils des Datenpakets z. B. mit "nein", "gestört" oder "0" angegeben werden. Ferner könnten auch mehrere Störungszustände von Teilen von Datenpaketen, die über einen Frequenzkanal gesendet wurden, als Grundlage zur Bewertung der Übertragungsqualität dieses Frequenzkanals herangezogen werden. In einfacher Weise kann dies durch eine Mittelwertbildung der Störungszustände der Teile der Datenpakete erfolgen.

Erfindungsgemäß ist eine Mehrzahl von Frequenzkanalmustern vorgesehen, die eine jeweils festgelegte Abfolge der Belegung der Frequenzkanäle umfassen. Ein Frequenzkanalmuster kann sich hierbei entweder über alle Frequenzkanäle erstrecken, d. h. dass jeder Frequenzkanal für die Übertragung der Teile der Datenpakete genutzt wird (volle Diversität), oder es kann vorgesehen sein, bestimmte Frequenzkanäle auszublenden. Beispielsweise kann ein mittenbetontes Frequenzkanalmuster alle randseitigen Frequenzkanäle (hohe und niedrige Frequenzbereiche) für die Übertragung der Datenpakete ausblenden. Alternativ können in einem Frequenzkanalmuster auch alle randseitigen Frequenzkanäle zum Übertragen der Teile von Datenpaketen genutzt werden. Ferner können auch nur die Frequenzbereiche einer Seite, d. h. entweder die hohen oder die niedrigen Frequenzbereiche, zur Übertragung der Teile der Datenpakete genutzt werden. Zur Übertragung eines aus mehreren Datenpaketen bestehenden Telegramms können die Teile der Datenpakete immer in einer bestimmten Frequenzkanalabfolge übertragen werden, z. B. Datenpaketteil 1 über Frequenzkanal 1, Datenpaketteil 2 über Frequenzkanal 2, Datenpaketteil 3 über Frequenzkanal 4, Datenpaketteil 4 über Frequenzkanal 3, Datenpaketteil 5 über Frequenzkanal 1, und so weiter. Das Frequenzkanalmuster kann hierbei beliebig oft wiederholt werden.

Erfindungsgemäß wird anhand der Bewertung der Übertragungsqualität des jeweiligen Frequenzkanals eine Änderung des aktuellen Frequenzkanalmusters in ein anderes Frequenzkanalmuster vorgenommen.

Ferner kann ein Algorithmus vorgesehen sein, anhand dessen der Sender ein Frequenzkanalmuster wählt, welches dem Empfänger vor oder mit der Übertragung der Daten mitgeteilt wird. Beispielsweise kann es sich bei dem Algorithmus um einen Zufallswert oder eine ereignisbasierte Berechnung handeln.

Vorzugsweise erfolgt eine Änderung des Frequenzkanalmusters erst wenn das neue Frequenzkanalmuster hinsichtlich der Übertragungsqualität überprüft worden ist. Die Überprüfung kann z. B. mittels einer Frequenzkanalabtastung bzw. einer Kalibrierfunktion erfolgen. Daraus resultiert der Vorteil, dass keine Frequenzkanäle bzw. Frequenzkanalmuster ausgewählt werden, die eine schlechte Übertragungsqualität besitzen.

Zweckmäßigerweise kann vom Sender ein Änderungssignal erzeugt werden, um eine bevorstehende Änderung des Frequenzkanalmusters zu signalisieren. Das Änderungssignal muss hierbei vom Empfänger mittels eines Bestätigungssignals an den Sender bestätigt werden, um eine Änderung des Frequenzkanals oder des Frequenzkanalmusters zu ermöglichen. Das Bestätigungssignal wird vom Empfänger erzeugt und an den Sender übermittelt, um eine Änderung des Frequenzkanalmusters zuzulassen. Die Kommunikation zwischen Sender und Empfänger erfolgt hierbei bidirektional. Daraus resultiert der Vorteil, dass zwischen Sender und Empfänger keine Änderung des Frequenzkanalmusters erfolgt, ohne dass über das neue Frequenzkanalmuster Einigkeit besteht. Dadurch wird für die Selektion des Frequenzkanalmusters die Übertragungssituation bzw. die Bewertung des Frequenzkanals von Sender und Empfänger mit einbezogen. Die Übertragungssicherheit bei der Selektion der Frequenzkanäle wird dadurch in besonderem Maße erhöht. Zweckdienlich ist es hierbei, wenn das Änderungssignal des Senders bereits ein vom Sender vorgeschlagenes Frequenzkanalmuster enthält.

Alternativ oder zusätzlich kann auch das Bestätigungssignal ein vom Empfänger vorgeschlagenes Frequenzkanalmuster enthalten oder wird in dem vorgeschlagenen Frequenzkanalmuster gesendet, wobei das dadurch vom Empfänger vorgeschlagene Frequenzkanalmuster anschließend vom Sender überprüft wird und anhand der Überprüfung vom Sender abgelehnt oder angenommen wird.

In vorteilhafter Weise kann eine Abtastung der Frequenzkanäle erfolgen, indem ein erster Teil der Bits eines Datenpakets über bestimmte Frequenzkanäle ohne Frequenzkanaländerung übermittelt werden. Ferner wird ein zweiter Teil der Bits eines Datenpakets auf andere, zur Datenpaketübertragung nicht verwendete, Frequenzkanäle verschoben, um die Übertragungsqualität dieser zu ermitteln. Dadurch kann die Übertragungsqualität der Frequenzkanäle, auf denen der zweite Teil der Bits des Datenpakets übertragen wird, bewertet werden. Ferner können durch diese schrittweise Bewertung der Frequenzkanäle bzw. Frequenzkanalabtastung (Kalibrierfunktion) spektrale Lücken aufgespürt und so die Übertragungsqualität des gesamten Frequenzbandes erfasst werden. Die Bewertung dieser Frequenzkanäle kann bei der Selektion der Frequenzkanäle bzw. der Frequenzkanalmuster mit einbezogen werden. Daraus resultiert der Vorteil, dass eine große Bandbreite an Frequenzkanälen zur Frequenzkanalauswahl erfasst werden kann. Bei der Abtastung der Frequenzkanäle werden bevorzugt alle Frequenzkanäle eines Frequenzbandes abgetastet, um die bestmögliche Übertragungsqualität innerhalb des Frequenzbandes zu ermitteln.

In besonders vorteilhafter Weise kann eine Bewertung der Übertragungsqualität eines Frequenzkanals auch anhand der bewerteten Übertragungsqualität anderer Frequenzkanäle bzw. des Störungszustandes eines Teils eines Datenpakets, welches über einen anderen Frequenzkanal übertragen wurde, durchgeführt werden. Diese Bewertung kann durch Interpolation erfolgen, indem z. B. durch die bereits erfolgte Bewertung benachbarter Frequenzkanäle eines nicht bewerteten Frequenzkanals darauf geschlossen wird, wie gut die Übertragungsqualität eines zwischen den nicht bewerteten Frequenzkanal ist, z. B. durch Mittelwertbildung der Störungszustandes der Teile der Datenpakete, die auf den benachbarten Frequenzkanälen übertragen worden sind. Dadurch lassen sich Frequenzkanäle bewerten, ohne dass Datenpaketteile über diese Frequenzkanäle gesendet wurden, sodass die Anzahl der bewerteten Frequenzkanäle bei gleichbleibendem Bewertungsaufwand vergrößert wird. Ferner kann dadurch die benötigte Zeit für die Bewertung der Frequenzkanäle verkürzt werden.

Vorzugsweise umfasst der Sender und/oder der Empfänger eine Frequenzreferenzeinrichtung zum Festlegen der Frequenz, wobei die Frequenzreferenzeinrichtungen in der Regel Frequenzabweichungen aufweisen und die Frequenzabweichungen zur Auswahl des Frequenzkanals bzw. der Frequenzkanäle und/oder des Frequenzkanalmusters herangezogen wird.

Ferner beansprucht die vorliegende Erfindung ein Verfahren, welches folgende Verfahrensschritte umfasst:

- Senden eines Datenpakets über einen Frequenzkanal vom Sender zum Empfänger,

- Empfangen des Datenpakets durch den Empfänger,
- vorzugsweise bitweises oder für bestimmte Bits gruppenweises Ermitteln der Wahrscheinlichkeitsquotienten WQ für einen festgelegten Teil des Datenpakets durch den Empfänger,
- Schätzen der Frequenzabweichung der Frequenzreferenzeinrichtung des Senders durch den Empfänger,
- Ermitteln des Störungszustandes des festgelegten Teils des Datenpakets anhand der Wahrscheinlichkeitsquotienten WQ,
- Bewerten der Übertragungsqualität des jeweiligen Frequenzkanals anhand des Störungszustandes des Teils des Datenpakets,
- Auswahl und/oder Korrektur eines Frequenzkanals oder eines Frequenzkanalmusters anhand des Bewertungsergebnisses, sowie
- Mitteilen des gewählten Frequenzkanals und/oder des gewählten Frequenzkanalmusters vom Empfänger zum Sender.

Zweckmäßigerweise kann ein Speicher zum Speichern der Bewertungen der Übertragungsqualität eines Frequenzkanals vorgesehen sein. Die Auswahl der Frequenzkanäle und/oder des Frequenzkanalmuster erfolgt dabei zusätzlich anhand der gespeicherten Bewertungen.

Besonders zweckmäßig ist es, wenn anhand der Bewertung der Frequenzkanäle und/oder des Störungszustandes eines Teils des Datenpakets ein Qualitätsindikator QI ermittelt wird, der zur Bewertungen des jeweiligen Frequenzkanalmusters dient und die Auswahl des Frequenzkanalmusters anhand des Qualitätsindikators QI getroffen wird.

Gemäß einer besonderen Ausgestaltungsvariante des Verfahrens kann es sich bei dem Sender und/oder bei dem Empfänger um ein Verbrauchsmessgerät zur Verbrauchsdatenerfassung oder um einen Datensammler zum Sammeln der Verbrauchsdaten handeln. Das Kommunikationssystem dient hierbei dazu, die Verbrauchsdaten mehrerer Verbrauchsmessgeräte an einen oder mehrere Datensammler zu übermitteln. Der oder die Datensammler können diese Verbrauchsdaten anschließend an eine übergeordnete Zentraleinheit des Versorgers übermitteln. Ferner können auch Betriebsdaten, wie z. B. Firmwareupdates, über das Kommunikationssystem an die Verbrauchsmessgeräte verteilt werden.

Vorzugsweise erfolgt die Kalibrierfunktion im Downlinkverfahren, d. h. dass der Datensammler, die Datenpakete zur Bewertung von Frequenzkanälen an das Verbrauchsmessgerät übermittelt. Die Sendefrequenz und die Empfangsfrequenz werden hierbei nur für die Übertragung zwischen diesen beiden Kommunikationsmodulen von Sender und Empfänger verwendet. Alternativ kann die Kalibrierfunktion jedoch auch im Uplinkverfahren erfolgen, bei dem z. B. die jeweiligen Verbrauchsmessgeräte Datenpakete an den Datensammler senden. Hierzu muss der Datensammler auf einem Frequenzkanal die Übertragung von allen Verbrauchsmessgeräten erfassen. Insbesondere für das Uplinkverfahren ist es demnach vorteilhaft, bestimmte Zeiten, sogenannte Zeitslots, zum Übertragen der Datenpakete von den Verbrauchsmessgeräten an den Datensammler auf bestimmten Frequenzkanälen festzulegen, um die Übertragung der Datenpakete zeitlich einzuteilen. Dadurch können Störungen vermieden werden, die durch das gleichzeitige Senden mehrerer Verbrauchsmessgeräte entstehen können.

Bei einer alternativen Ausgestaltungsvariante des Verfahrens handelt es sich bei dem Sender um eine Vorrichtung zum Ermitteln eines Füllstandes. Beispielsweise könnte eine derartige Vorrichtung an einer Mülltonne zur Ermittlung des Füllstandes der Mülltonne, einem Wasserreservoir zur Ermittlung des Wasserstandes (z. B. Trinkwasserreservoir, Kanalisation oder Regenüberlaufbecken), einem Regal (z. B. zur Aufbewahrung von Waren des täglichen Gebrauchs, Schriftstücken oder Medikamenten) zur Ermittlung der Aufbewahrungsmengen, oder auch einem anderen Vorratsbehältnisses (z. B. einem Kühlschrank oder dergleichen) zur Ermittlung des Füllstandes der im Vorratsbehältnis aufbewahrten Gegenstände vorgesehen sein.

Die Auswahl des Frequenzkanals bzw. der Frequenzkanäle und/oder des Frequenzkanalmusters kann anhand eines Zufallswertes erfolgen. Der Zufallswert kann hierbei z. B. zufällig, pseudozufällig oder durch einen festlegbaren Algorithmus festgelegt werden. Beispielsweise "würfelt" der Sender den Zufallswert durch einen bestimmten Verschlüsselungsmechanismus und generiert dadurch ein zufälliges Frequenzkanalmuster anhand zufällig gewählter Frequenzkanäle, insbesondere aus den bereits positiv bewerteten Frequenzkanälen. Der Zufallswert wird dabei jeweils vor der Datenübertragung dem Empfänger übermittelt, sodass dieser die Auswahl der Frequenzkanäle bzw. des Frequenzkanalmusters durch den Sender anhand des Zufallswertes ermitteln bzw. berechnen kann.

Zweckmäßigerweise kann die Auswahl anhand des Zufallswertes bei jeder folgenden Datenübertragung oder in bestimmten Zeitabständen erneut durchgeführt werden. Dadurch werden stets neue Frequenzen bzw. Frequenzkanalmuster ausgewählt, sodass die Übertragungsqualität in besonderem Maße verbessert wird. Überraschenderweise hat sich zudem gezeigt, dass die Übertragungssicherheit verbessert wird, da z. B. Angriffe auf das Kommunikationssystem durch Dritte infolge der zufälligen und häufig durchgeführten Variation der Frequenzkanäle bzw. des Frequenzkanalmusters erheblich erschwert werden.

Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:

Fig. 1     eine stark vereinfachte schematische Darstellung mehrerer Verbrauchsmessgeräte, welche jeweils mittels eines Kommunikationsmoduls Datenpakete an einen Datensammler übermitteln;

Fig. 2     eine vereinfachte Darstellung der zeitlichen Abfolge des Sendens eines Datenpaketes mit geringem Signalrauschen vor und nach dem Datenpaket;

Fig. 3     eine vereinfachte Darstellung der zeitlichen Abfolge des Sendens eines Datenpaketes mit deutlichem Signalrauschen vor und nach dem Datenpaket;

Fig. 4     eine vereinfachte Darstellung der zeitlichen Abfolge des Sendens eines Datenpaketes mit Störsignal im Signalrauschen vor dem Datenpaket;

Fig. 5     eine stark vereinfachte schematische Darstellung eines Verbrauchsmessgerätes, welches mittels eines Kommunikationsmoduls Datenpakete an einen Datensammler übermittelt gemäß dem erfindungsgemäßen Verfahren;

Fig. 6     eine vereinfachte Darstellung eines Beispiels eines Frequenzkanalmusters im Frequenzsprungverfahren;

Fig. 7     eine vereinfachte Darstellung des Frequenzkanalmusters aus Fig. 6 im Frequenzsprungverfahren mit gestörten Frequenzkanälen;

Fig. 8     eine vereinfachte Darstellung mehrerer möglicher Frequenzkanalmuster im Frequenzsprungverfahren;

Fig. 9     eine vereinfachte Darstellung der Datenpaketfehlerraten-Kurve und der Wahrscheinlichkeitsquotienten-Kurve über die Frequenzkanäle des gestörten Frequenzkanalmusters aus Fig. 7;

Fig. 10     eine schematische Darstellung eines ersten Ablaufplans zur Überprüfung der Übertragungsqualität eines Frequenzkanals;

Fig. 11     eine schematische Darstellung eines zweiten Ablaufplans zur Änderung des Frequenzkanalmusters, sowie

Fig. 12     ein vereinfachte Darstellung eines Sendeablaufs einer Datenübertragung von Sender zu Empfänger in einem bestimmten Frequenzkanalmusters mit sender- und empfängerseitiger Frequenzabweichung.

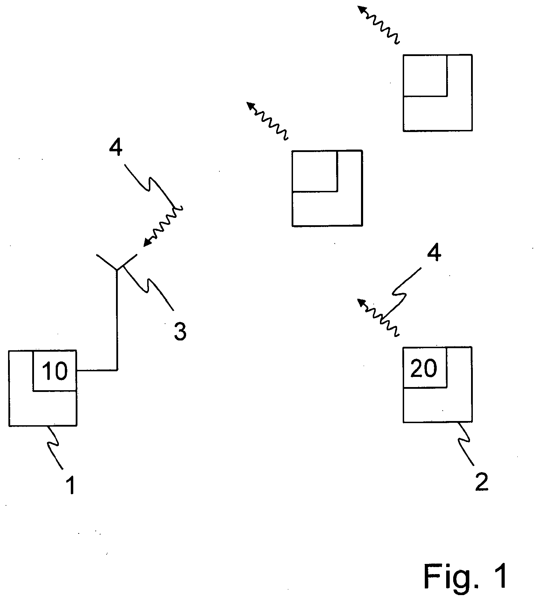

Fig. 1 zeigt ein Kommunikationssystem bei welchem mehrere Verbrauchsmessgeräte 2 mit jeweils einem integrierten Kommunikationsmodul 20 mit einem Kommunikationsmodul 10 eines Datensammlers 1 über Funk kommunizieren. Das jeweilige Verbrauchsmessgerät 2 sendet hierbei Datenpakete 4 oder Teile der Datenpakete 4 über das Kommunikationsmodul 20 an das Kommunikationsmodul 10 des Datensammlers 1. Um einen ausreichenden Empfang der Datenpakete 4 zu gewährleisten, umfasst das Kommunikationsmodul 10 des Datensammlers 1 eine Antenne 3. Die Datenpakete 4 enthalten beispielsweise die Verbrauchsmessdaten des jeweiligen Verbrauchsmessgerätes 2, wie zum Beispiel Zählerstand, aktueller Verbrauch, Temperatur oder dergleichen. Die Datenübertragung der Datenpakete 4 zwischen den Kommunikationsmodulen 10 und 20 erfolgt hierbei über Funk im Frequenzsprungverfahren. Je nachdem, ob das jeweilige Verbrauchsmessgerät 2 und/oder der Datensammler 1 gerade sendet oder empfängt, kann das Verbrauchsmessgerät 2 und/oder der Datensammler 1 Sender oder Empfänger sein.

Die Übertragung der Teile der Datenpakete 4 erfolgt gemäß dem Frequenzsprungverfahren über wahlweise mehrere, unterschiedliche Frequenzkanäle K1-Kn. Das jeweilige Datenpaket 4 oder ein festgelegter Teil desselben wird vor dem Senden vom Sender, z. B. das jeweilige Verbrauchsmessgerät 2, kodiert und nach dem Empfang vom Empfänger, z. B. dem Datensammler 1, dekodiert. Die Übertragungsqualität der Frequenzkanäle K1-Kn wird bewertet, wobei anhand der Bewertung der Übertragungsqualität der Frequenzkanäle K1-Kn eine Entscheidung für eine Auswahl des Frequenzkanals K1-Kn bzw. der Frequenzkanäle K1-Kn getroffen wird, der/die zur Übertragung der Daten verwendet wird/werden. Erfindungsgemäß wird ein Wahrscheinlichkeitsquotient WQ für die Wahrscheinlichkeit einer erfolgreichen Übertragung vorzugsweise bitweise für einen Teils des Datenpaket 4 vor der Dekodierung durch den Empfänger ermittelt. Ferner kann der Wahrscheinlichkeitsquotient WQ auch für eine festlegbare Gruppe von Bits ermittelt werden. Die jeweiligen Wahrscheinlichkeitsquotienten WQ eines Teils des Datenpakets 4, der Bits oder einer Gruppe von Bits werden dann als Metrik zur Ermittlung des Störungszustandes des Datenpakets 4 herangezogen, wobei anhand des Störungszustandes des Teils des Datenpakets 4 die Bewertung der Übertragungsqualität des jeweiligen Frequenzkanals K1-Kn erfolgt. Der Wahrscheinlichkeitsquotient WQ errechnet sich anhand des Wahrscheinlichkeits-Quotienten-Tests (likelihood-ratio-test). In Funk-Systemen wird in der Regel eine Vorwärtsfehlerkorrektur (FEC) durchgeführt, die es ermöglicht, den Empfänger zu korrigieren. Dadurch wird z. B. die Reichweite des Funksystems erhöht. Am Eingang des Empfängers bzw. Dekoders werden die sogenannten Wahrscheinlichkeitsquotienten WQ ("LR's" bzw. likelihood ratios) eingespeist, die z. B. durch ein in den Figuren nicht dargestelltes LLR-Modul erfasst werden können. Wenn z. B. ein aus Bits zusammengesetzter Teil des Datenpakets 4 sehr gestört ist, wird der Teil des Datenpakets 4 abgewertet, z. B. im schlechtesten Fall mit 50 % Bit 1 / 50 % Bit 0 (d. h. 50 % der Bits sind gestört und 50 % der Bits sind ungestört). Dieses Datenpaketteil 4 liefert somit keine Information bzw. keine zuverlässige Information. Demgegenüber kann ein ungestörtes Teil eines Datenpakets 4 entsprechend gut mit z. B. 99 % Bit 1 / 1 % Bit 0 bewertet werden. Dieser Wahrscheinlichkeitsquotient WQ lässt sich für einen Teil des Datenpakets 4, jedes Bit oder eine Gruppe von Bits des Datenpakets 4 ermitteln. Beispielsweise kann anhand der Wahrscheinlichkeitsquotienten WQ bzw. der LR's der Bits ein Wahrscheinlichkeitsquotient WQ für ein z. B. 12 Bits umfassendes Datenpaketteils ermittelt werden, indem z. B. 4 Bits einen WQ= 50% / 50%, 4 Bits einen WQ = 100 % / 0% und 4 Bits einen WQ = 75 % / 25 % aufweisen. Der Wahrscheinlichkeitsquotient WQ des Datenpaketteils errechnet sich demgemäß nach

$$WQ = (0{,}33 * 0{,}5) + (0{,}33 * 1{,}0) + (0{,}33 * 0{,}85) = 0{,}78 \; (= 78 \, \%).$$

Hierbei entspricht einer Abwertung, d. h. einer mangelhaften oder gestörten Übertragung, z. B. ein Wert von 50 %, und einer positiven Wertung, d. h. einer sehr guten und ungestörten Übertragung, z. B. ein Wert von 99 %. Ferner kann der Wahrscheinlichkeitsquotient WQ auch als numerisches Maß (Metrik) für die Bewertung der Übertragungsqualität des gesamten Frequenzkanals K1-K6 herangezogen werden. Die Daten werden hierbei in Teilen von Datenpaketen 4 (Hops) auf mehreren Frequenzen bzw. Frequenzkanälen K1-K6 verteilt, wobei für jeden Teil des Datenpakets ein Wahrscheinlichkeitsquotient WQ berechnet wird. Mehrere Teile von Datenpaketen 4, welche über die gleiche Frequenz gesendet wurden, werden zur Erstellung einer Frequenzmetrik (Frequenzbewertung) benutzt. Falls auf bestimmten Frequenzen keine Teile von Datenpaketen 4 gesendet werden, kann die Qualität dieser Frequenzen alternativ durch Interpolation geschätzt werden.

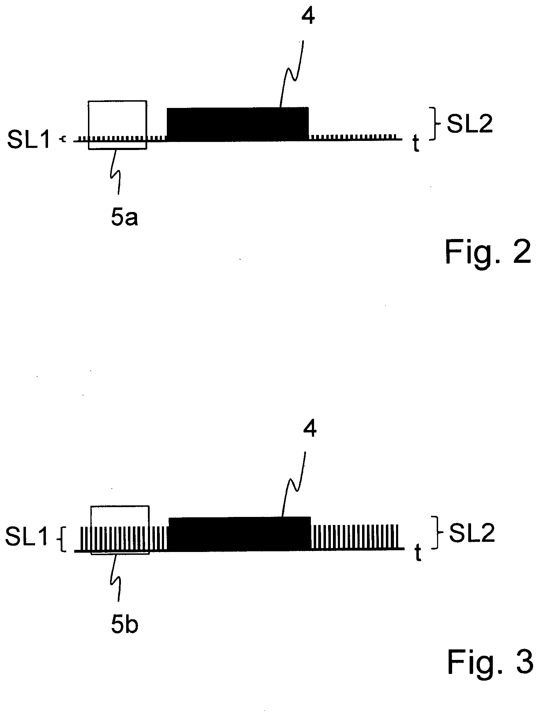

Zur Selektion der Frequenzkanäle kann z. B. die Signalleistung SL1 in einem Frequenz/Zeit-Block 5a außerhalb des jeweiligen Teils des Datenpakets 4 in dem betreffenden Frequenzkanal K1-Kn ermittelt werden. In Fig. 2 ist die zeitliche Abfolge der Übertragung eines Teils eines Datenpakets 4 sowie die Signalleistung SL1 bzw. das Signalrauschen vor und nach der Übertragung des Teils des Datenpakets 4 dargestellt. Zur Bestimmung der Signalleistung SL1 kann diese beispielsweise über den gesamten Frequenz/Zeit-Block 5a gemittelt werden oder über die maximale und minimale Signalleistung innerhalb des Frequenz/Zeit-Blocks 5a bestimmt werden. Die Signalleistung SL1 außerhalb der Übertragung des Teils des Datenpakets 4 ist hierbei wesentlich geringer als die Signalleistung SL2 während der Übertragung des Teils des Datenpakets 4.

In Fig. 3 ist ebenfalls eine zeitliche Abfolge der Übertragung eines Teils eines Datenpakets 4 dargestellt. Jedoch zeigt die Signalleistung SL1 außerhalb der Übertragung des Teils des Datenpakets 4 bzw. innerhalb des Frequenz/Zeit-Blocks 5b einen deutlichen Ausschlag, der sich nicht mehr wesentlich von der Signalleistung SL2 während der Übertragung des Teils des Datenpakets 4 unterscheidet. Die Signalleistung SL1 bzw. das Signalrauschen im Frequenz/Zeit-Block 5b ist somit wesentlich höher als die Signalleistung SL1 innerhalb des Frequenz/Zeit-Blocks 5a in Fig. 2.

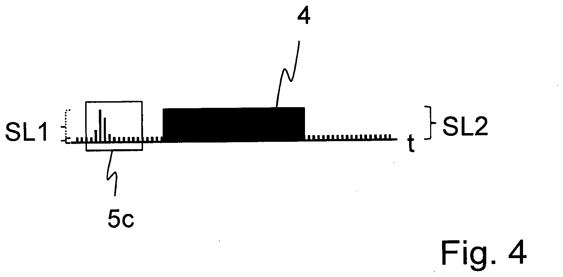

Die Signalleistung SL1 im Frequenz/Zeit-Block 5a lässt darauf schließen, dass zu dieser Zeit t nur wenige bis gar keine Störungen bzw. Fremd-Übertragungen auf dem entsprechenden Frequenzkanal K1-Kn stattgefunden haben. Folglich scheint der Frequenzkanal K1-Kn wenig- oder ungestört zu sein. Im Gegensatz dazu zeigt der Frequenz/Zeit-Block 5b eine deutlich größere Signalleistung SL1 und lässt dadurch auf einen hohen Störeranteil und/oder eine geringe Übertragungsqualität schließen. Ebenso können, gemäß Fig. 4, auch zeitlich begrenzt und/oder vereinzelt auftretende Störer erfasst werden, indem diese in einem Frequenz/Zeit-Block 5c außerhalb der Übertragung des jeweiligen Teils des Datenpakets 4 erfasst werden. In Fig. 4 ist ein vereinzelt auftretender Störer anhand des Störsignals SL1 dargestellt.

Zweckmäßigerweise können derartige Rückschlüsse bei der Bewertung der Übertragungsqualität der Frequenzkanäle K1-Kn miteinbezogen werden. Beispielsweise kann auch ein Grenzwert für die Signalleistung SL1 in einem Frequenz/Zeit-Block 5a, 5b, 5c außerhalb des jeweiligen Teils des Datenpakets 4 des betreffenden Frequenzkanals K1-Kn festgelegt werden. Ferner wird die aktuell ermittelte Signalleistung SL1 innerhalb eines Frequenz/Zeit-Blocks 5a, 5b, 5c außerhalb des jeweiligen Teils des Datenpakets 4 stetig mit diesem vorgegebenen Grenzwert verglichen. Im Falle einer Überschreitung des Grenzwertes wird der jeweilige Teils des Datenpakets 4 und/oder der jeweilige Frequenzkanal K1-Kn als gestört bewertet. Berücksichtigt werden hierbei sowohl einheitlich erhöhte Signalleistungen SL1 außerhalb der Übertragung des Teils des Datenpakets 4 (z. B. ein erhöhtes Signalrauschen gemäß Signalleistung SL1 in Fig. 3) als auch vereinzelt auftretende Störsignale (z. B. ein Störer gemäß Signalleistung SL1 in Fig. 4), um gezielt unterschiedliche Arten von Störern zu detektieren.

Alternativ oder zusätzlich kann auch die Signalleistung SL2 während der Übertragung von Teilen der Datenpakete 4 mit der Signalleistung SL1 außerhalb der Übertragung der Teile der Datenpakete 4 in Relation zueinander gesetzt werden, d. h. es wird ein Signal-zu-Rausch- und/oder Signal-zu-Interferenz-Verhältnis ermittelt. Das jeweils ermittelte Verhältnis lässt unter anderem Rückschlüsse auf die Übertragungsqualität der Teile der Datenpakete 4 auf dem jeweiligen Frequenzkanal K1-Kn zu. Hierbei ist nicht unbedingt entscheidend wie groß bzw. wie klein das Signalrauschen SL1 außerhalb der Übertragung der Teile der Datenpakete 4 ist, sondern z. B. um wieviel größer die Signalleistung SL2 während der Übertragung der Teile der Datenpakete 4 im Vergleich zur Signalleistung SL1 außerhalb der Übertragung der Teile der Datenpakete 4 ist. Dadurch können auch unterschiedliche Einflüsse auf die Übertragungsqualität, wie z. B. Fading bedingt durch schlechte Übertragungsbedingungen am Standort (z. B. durch Abschattung bedingt), ermittelt und unterschieden werden. Die Bewertung der Frequenzkanäle K1-Kn erfolgt dadurch noch sicherer, indem der Störungszustand der Teile der Datenpakete 4 bzw. der Wahrscheinlichkeitsquotient WQ mit den Signal-zu-Rausch- und/oder Signal-zu-Interferenz-Verhältnissen der jeweiligen Teile der Datenpakete 4 skaliert werden, d. h. das Signal-zu-Rausch-Verhältnis oder das Signal-zu-Interferenz-Verhältnis wird für die Wahrscheinlichkeitsquotienten-Berechnung berücksichtigt.

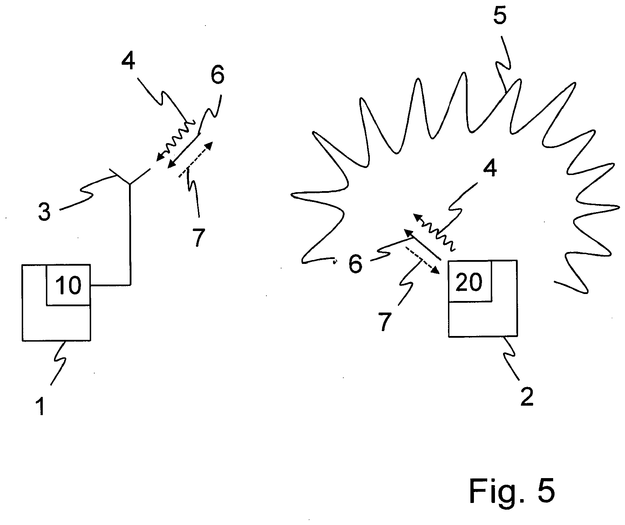

Fig. 5 zeigt das Kommunikationssystem aus Fig. 1 mit einem Verbrauchsmessgerät 2 und einer Störung 5 im Bereich des Verbrauchsmessgerätes 2. Im Falle einer auftretenden Störung 5 im Bereich eines Frequenzkanals K1-Kn, welcher für die Übertragung der Teile der Datenpakete 4 vom Kommunikationsmodul 20 des Verbrauchsmessgerätes 2 zum Kommunikationsmodul 10 des Datensammlers 1 genutzt wird, kann das Verbrauchsmessgerät 2 bzw. dessen Kommunikationsmodul 20 z. B. anhand einer Störerdetektion feststellen, dass eine Störung 5 vorliegt. Beispielsweise kann auch eine Störerdetektion verwendet werden, die auf den Wahrscheinlichkeitsquotienten WQ basiert. Um nun einen Frequenzkanalwechsel herbeizuführen, ist es gemäß einer zweckmäßigen Ausgestaltung vorteilhaft, wenn das Verbrauchsmessgerät 2 über das Kommunikationsmodul 20 ein Änderungssignal 6, welches durch das Kommunikationsmodul 20 erzeugt wird, an das Kommunikationsmodul 10 des Datensammlers 1 überträgt. Nachdem das Kommunikationsmodul 10 das Änderungssignal 6 des Kommunikationsmoduls 20 empfangen hat, überprüft das Kommunikationsmodul 10 den Änderungswunsch des Frequenzkanals K1-Kn des Kommunikationsmoduls 20. Um die Änderung des Frequenzkanals K1-Kn herbeizuführen, generiert das Kommunikationsmodul 10 des Datensammlers 1 ein Bestätigungssignal 7, welches das Kommunikationsmodul 10 an das Kommunikationsmodul 20 übermittelt. Im Anschluss daran kann der Frequenzkanal K1-Kn oder das gesamte Frequenzkanalmuster 8, 8a-8d durch das Kommunikationsmodul 20 oder 10 geändert werden. Dadurch kann die Änderung der Frequenzkanalmuster 8, 8a-8d derart gesteuert werden, dass ein neues Frequenzkanalmuster 8, 8a-8d erst dann ausgewählt wird, wenn es hinsichtlich der Übertragungsqualität überprüft worden ist. Die Überprüfung der Übertragungsqualität kann z. B. mittels einer Frequenzkanalabtastung bzw. der Kalibrierfunktion erfolgen.

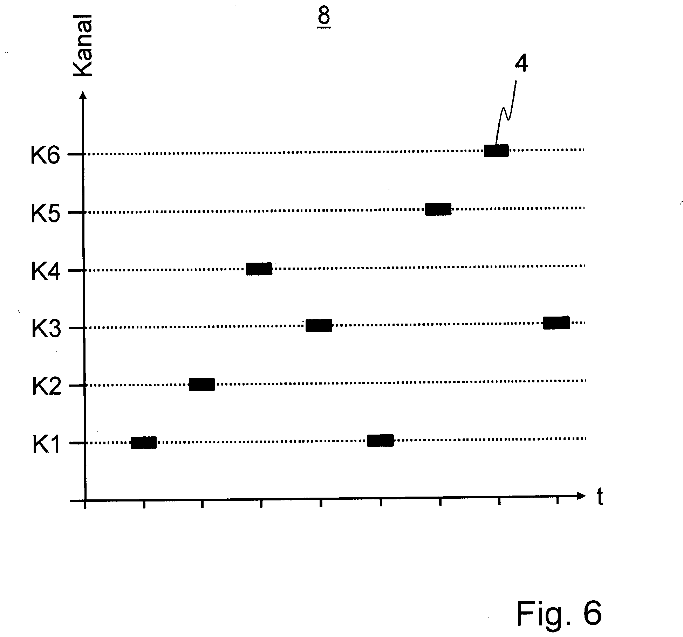

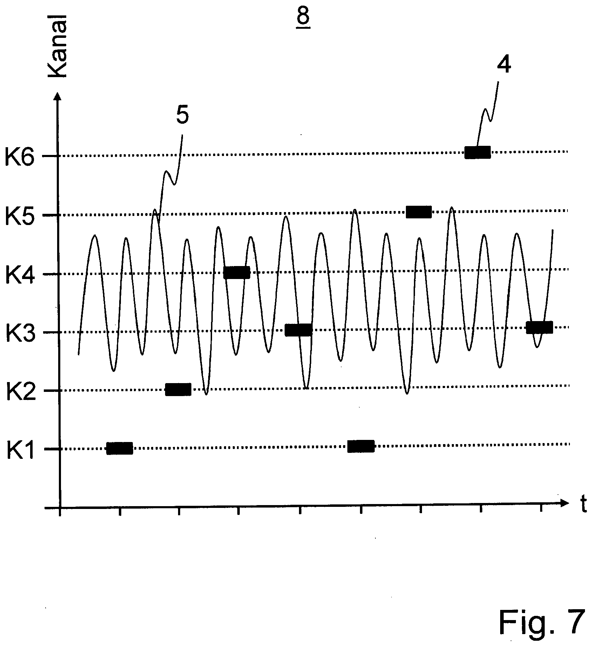

In Fig. 6 ist eine vereinfachte Darstellung eines Frequenzkanalmusters 8 im Frequenzsprungverfahren dargestellt. Die Teile der Datenpakete 4 werden hierbei zeitlich versetzt über die Frequenzkanäle K1-K6 zwischen den Kommunikationsmodulen 10, 20 übertragen. Innerhalb des Frequenzkanalmusters 8 werden für die Übertragung der Teile der Datenpakete 4 alle Frequenzkanäle K1-K6 genutzt (volle Diversität). Im Falle einer auftretenden Störung 5 der Frequenzkanäle K3 und K4, gemäß Fig. 7, können die Teile der Datenpakete 4, die über die Frequenzkanäle K3 und K4 übertragen werden, nicht mehr ungestört übermittelt werden. Ein Verlust oder Teilverlust dieser Teile der Datenpakete 4 wäre die Folge. Gemäß dem Verfahren der vorliegenden Erfindung können diese Störungen z. B. durch eine bereits beschriebene Störerdetektion rechtzeitig detektiert werden. Aufgrund einer Änderung der zu übertragenden Frequenzkanäle K1-K6 bzw. des gesamten Frequenzkanalmusters 8 wird gewährleistet, dass auch die gestörten Teile der Datenpakete 4, wenn diese über die anderen Frequenzkanäle K1, K2, K5 und K6 übertragen werden, ebenfalls ungestört übertragen werden können.

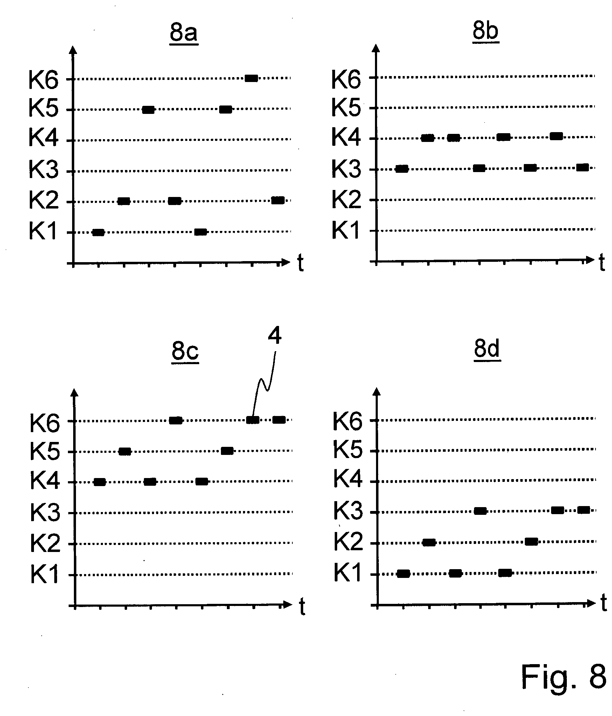

Beispielsweise kann das Frequenzkanalmuster 8, gemäß Fig. 6 und Fig. 7, in das in Fig. 8 dargestellte Frequenzkanalmuster 8a abgeändert werden. Das Frequenzkanalmuster 8a zeigt eine randseitige Betonung der Frequenzkanäle K1-K6. Die Frequenzkanäle K3 und K4 sind hierbei ausgeblendet. Demgemäß kann das Frequenzkanalmuster 8a Anwendung finden, wenn die mittleren Frequenzbereiche K3 und K4 gestört sind. Alternativ kann im Falle einer randseitigen Störung z. B. der Frequenzkanäle K1, K2, K5, K6 das Frequenzkanalmuster 8b angewendet werden, bei welchem eine mittenbetonte Vermessung der Frequenzbereiche bzw. des Frequenzbandes über die Frequenzkanäle K3 und K4 erfolgt. Im Falle einer einseitigen randseitigen Störung, d. h. einer Störung entweder im oberen oder im unteren Frequenzbereich, wird der jeweils gestörte Frequenzbereich ausgeblendet. Demnach ist gemäß des Frequenzkanalmusters 8c der untere Frequenzbereich, innerhalb dem die Frequenzkanäle K1-K3 liegen, ausgeblendet. Die Übertragung der Teile der Datenpakete 4 erfolgt hierbei lediglich über die Frequenzkanäle K4-K6 des oberen Frequenzbereichs. Ferner zeigt das Frequenzkanalmuster 8d eine Übertragung der Teile der Datenpakete 4 im unteren Frequenzbereich über die Frequenzkanäle K1-K3, wobei die Frequenzkanäle K4-K6, die innerhalb des oberen Frequenzbereichs liegen, für die Übertragung der Teile der Datenpakete 4 ausgeblendet sind.

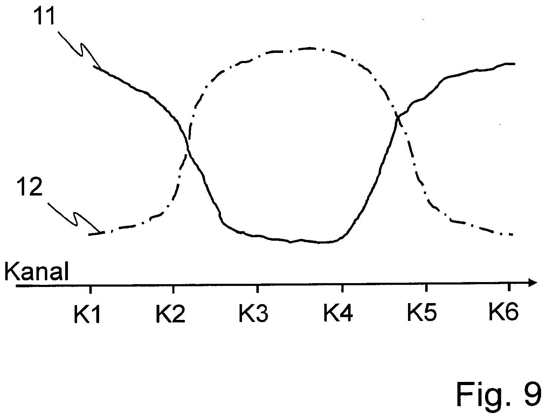

Die Wahrscheinlichkeitsquotienten WQ der Frequenzkanäle K1-K6 können vorzugsweise als Wahrscheinlichkeitsquotienten-Kurve 11 über die Frequenzkanäle K1-K6 aufgetragen werden. Die Wahrscheinlichkeitsquotienten-Kurve 11 der Wahrscheinlichkeitsquotienten WQ für die Frequenzkanäle K1-K6 des gestörten Frequenzkanalmusters 8, gemäß Fig. 7, ist in Fig. 9 grafisch dargestellt. Gemäß Fig. 9 ist der Wahrscheinlichkeitsquotient WQ für die Kanäle K1 und K6 am größten und für die Kanäle K3 und K4 am niedrigsten. Demzufolge sind die Frequenzkanäle K3 und K4 als gestört zu bewerten.

Ferner kann eine Datenpaketfehlerrate (hop error rate) für jeden Frequenzkanal K1-Kn bestimmt werden, z. B. anhand der Störerdetektion und/oder dem Signal-zu-Rausch-Verhältnis auf dem jeweiligen Frequenzkanal K1-Kn. Die Teil-Datenpaketfehlerraten-Kurve 12 für die Frequenzkanäle K1-K6, gemäß des gestörten Frequenzkanalmusters 8 in Fig. 7, ist ebenfalls in Fig. 9 dargestellt. Ebenso zeigt sich hier, dass die Frequenzkanäle K3 und K4, die eine hohe Datenpaketfehlerrate aufweisen, für eine Übertragung der Datenpakete 4 ungeeignet sind. Ferner sind die Frequenzkanäle K1 und K6, die eine niedrige Datenpaketfehlerrate aufweisen, für die Übertragung der Teile der Datenpakete 4 sehr gut geeignet. Auch hier zeigt sich, dass ein Frequenzkanalwechsel derart erfolgen sollte, dass die randseitigen Frequenzkanäle K1, K2, K5 und K6, die für eine Übertragung der Teile der Datenpakete 4 geeignet sind, zur Übertragung der Teile der Datenpakete 4 genutzt werden. Diese Bewertung der Frequenzkanäle K1-K6 wird hierbei durch die Datenpaketfehlerrate und den Wahrscheinlichkeitsquotienten WQ bestimmt. Durch diese doppelte Bewertung wird die Sicherheit bei der Selektion der Frequenzkanäle K1-K6 in besonderem Maße erhöht.

Der Wahrscheinlichkeitsquotient WQ des Teils des Datenpakets 4 kann entweder durch die Angabe, ob der Teil des Datenpakets 4 gestört oder ungestört ist, oder genau als Zahlenwert oder prozentualer Ausdruck dargestellt werden. Wenn der Wahrscheinlichkeitsquotient WQ als dualer Ausdruck, z. B. "0" und "1" angegeben wird, ist der Frequenzkanal K1-K6 als in Ordnung einzustufen sobald die Summe der Wahrscheinlichkeitsquotienten WQ > 0 ist (hierbei müssen z. B. zwei Drittel der Bits in Ordnung sein).

Anhand der prozentualen Darstellung kann durch eine Mittelwertbildung der Störungszustände der Teile der Datenpakete 4 bzw. den Wahrscheinlichkeitsquotienten WQ eine Auswahl für ein Frequenzkanalmuster ("Hop-Metrik") getroffen werden. Vorzugsweise wird für die Bewertung des jeweiligen Frequenzkanalmusters 8, 8a-8d ein Qualitätsindikator QI bestimmt bzw. berechnet. Die Berechnung erfolgt z. B. über die mittlere Gewichtung der Teile der Datenpakete 4, bzw. deren Störungszustände. Beispielsweise könnten anhand der Wahrscheinlichkeitsquotienten WQ 25 % der Teile der Datenpakete 4 mit 50 % gewichtet werden (voll gestört), 25 % mit 60 % (leichte Tendenz) und 50 % mit 98 % (nahezu ungestört). Der Qualitätsindikator QI für den Frequenzkanal errechnet sich hierbei nach

$$QI = (0{,}25 * 0{,}5) + (0{,}25 * 0{,}6) + (0{,}5 * 0{,}98) = 0{,}765 \ (= 76{,}5 \ \%).$$

Zudem kann ein Grenzwert GW des Qualitätsindikators QI für die Entscheidung, ob ein Frequenzkanalmuster 8, 8a-8d verwendet wird oder nicht, festgelegt werden, z. B. 70 %, vorzugsweise 75 %, besonders vorzugsweise 80 %. Die aktuell errechneten Qualitätsindikatoren QI der jeweiligen Frequenzkanalmuster 8, 8a-8d können anschließend mit dem Grenzwert des Qualitätsindikators QI verglichen werden, wobei das aktuelle Frequenzkanalmuster 8, 8a-8d beim Unterschreiten des Grenzwertes des Qualitätsindikators QI in ein anderes Frequenzkanalmuster 8, 8a-8d gewechselt wird, welches einen möglichst hohen Qualitätsindikator QI aufweist.

Für den Fall, dass bestimmte Frequenzen bzw. Frequenzkanäle K1-K6 gestört sind, kann somit ein neues Frequenzkanalmuster 8, 8a-8d ausgewählt werden. Falls der Empfänger eine Änderung des Frequenzkanalmusters 8, 8a-8d wünscht, kann der Empfänger entweder selbst entscheiden welches Frequenzkanalmuster 8, 8a-8d eingestellt wird, dem Sender mitteilen, welches Frequenzkanalmuster 8, 8a-8d eingestellt werden soll oder die Entscheidung dem Sender überlassen. Dabei erfolgt vorzugsweise eine "Absprache" zwischen Sender und Empfänger ("Ping-Pong").

Alternativ oder zusätzlich kann für die Bewertung des Frequenzkanalmusters 8, 8a-8d auch die Anzahl der empfangenen ungestörten Teile der Datenpakete 4 herangezogen werden. Hierzu wird die Anzahl an ungestörten Teile der Datenpakete 4, die benötigt wird, um das gesamte Datentelegramm erfolgreich zu dekodieren, mit der Anzahl an empfangenen ungestörten Teilen von Datenpaketen 4 verglichen. Falls die Anzahl an empfangenen ungestörten Teile von Datenpaketen 4 die Anzahl an benötigten Teile von Datenpaketen 4 unterschreitet, wird der Frequenzkanal K1-Kn bzw. das Frequenzkanalmuster 8, 8a-8d als gestört bewertet. Dies kann beispielsweise automatisch durch eine Vorwärtsfehlerkorrektur (FEC) erfolgen, die der Fehlerratensenkung bei der Übertragung der Teile der Datenpakete 4 dient. Dabei werden in einem Übertragungssystem die zu übertragenden Teile der Datenpakete 4 durch das sendende Kommunikationsmodul 10 bzw. 20 in redundanter Weise kodiert, sodass das empfangende Kommunikationsmodul 10 bzw. 20 Übertragungsfehler ohne Rückfrage an das sendende Kommunikationsmodul 10 bzw. 20 erkennen und korrigieren kann.

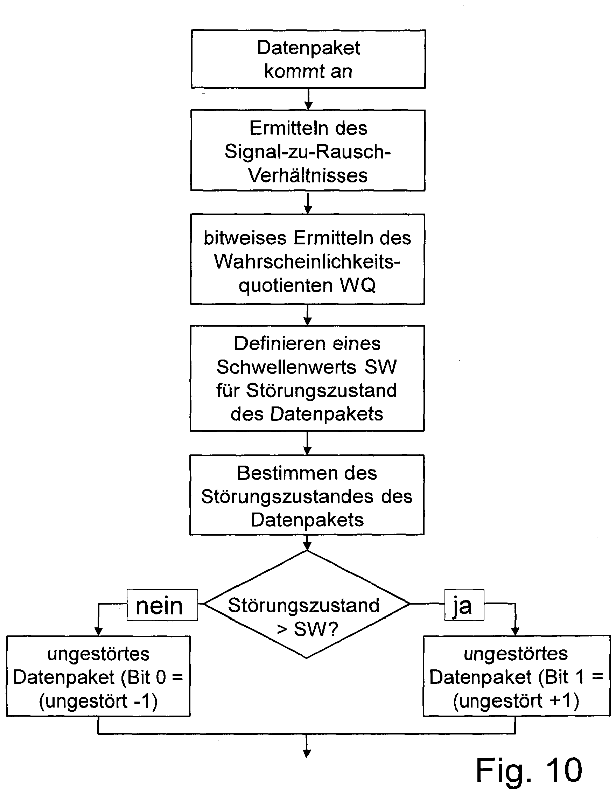

Fig. 10 zeigt eine Ausgestaltung eines Ablaufplans zur Überprüfung der Übertragungsqualität eines Frequenzkanals K1-Kn. Für das am Empfänger ankommende Teil des Datenpakets 4 wird zunächst vorzugsweise das Signal-zu-Rausch-Verhältnis bzw. das Signal-zu-Interferenz-Verhältnis ermittelt. Zudem wird der Wahrscheinlichkeitsquotient WQ z. B. bitweise ermittelt, um den Störungszustand des Teils des Datenpakets 4 festzustellen. Anschließend wird ein Schwellenwert SW (z. B. 75 %) für den Störungszustand festgelegt. Ferner kann das Signal-zu-Rausch-Verhältnis bzw. Signal-zu-Interferenz-Verhältnis zur Ermittlung des Wahrscheinlichkeitsquotienten WQ herangezogen werden, d. h. der Wahrscheinlichkeitsquotient WQ wird bestimmt und mit dem Signal-zu-Rausch-Verhältnis bzw. Signal-zu-Interferenz-Verhältnis skaliert. Anhand der Wahrscheinlichkeitsquotienten WQ der Bits bzw. der Teile der Datenpakete 4 kann anschließend, wie oben beschrieben, ein Qualitätsindikator QI für das jeweilige Frequenzkanalmuster 8, 8a-8d ermittelt werden. Das Frequenzkanalmuster 8, 8a-8d wird dann als ungestört bewertet, wenn der Qualitätsindikator QI größer als der Grenzwert GW ist.

Der Ablaufplan gemäß Fig. 10 kann fortlaufend für jedes Teil eines Datenpakets 4 stichprobenartig für bestimmte Teile von Datenpaketen 4 oder als Bestandteil der Frequenzkanalabtastung bzw. der Kalibrierfunktion durchgeführt werden. Die Übertragungsqualität eines Frequenzkanalmusters 8, 8a-8d kann hierbei ermittelt werden, indem die gesamten Teile von Datenpaketen 4 eines Frequenzkanalmusters 8, 8a-8d (z. B. acht Teile von Datenpaketen 4 gemäß Fig. 6-8) auf den entsprechenden Frequenzkanälen K1-K6 mindestens einmal gesendet und überprüft werden. Beispielsweise verbleibt ein Teil der Teile der Datenpakete 4 bzw. der Hops auf ihrem Frequenzkanal während andere Teile der Datenpakete 4 auf alternativen Frequenzen bzw. anderen Frequenzkanäle gesendet werden um diese Frequenzen bzw. Frequenzkanäle zu testen. Dadurch kann das gesamte Frequenzband abgetastet werden, wodurch Lücken im Spektrum aufgespürt werden können, die anschließend z. B. durch Interpolation geschlossen werden.

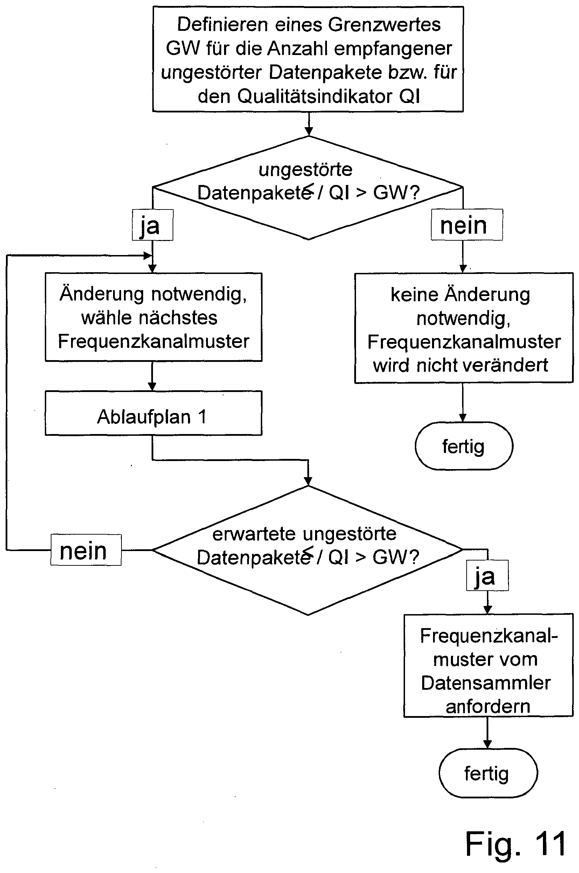

Fig. 11 zeigt eine Ausgestaltung eines Ablaufplans zur Änderung des Frequenzkanalmusters 8, 8a-8d. Der erste Schritt des Ablaufplans ist das Ermitteln bzw. Definieren eines Grenzwertes GW für die Anzahl übertragener ungestörter Teile der Datenpakete 4, die benötigt wird, um die Teile der Datenpakete 4 erfolgreich dekodieren zu können, oder für den Qualitätsindikator QI, z. B. 10 %. Liegt die Anzahl an tatsächlich empfangenen Teile der Datenpakete 4 bzw. der Qualitätsindikator QI über dem Grenzwert GW, ist keine Änderung des Frequenzkanalmusters 8, 8a-8d notwendig. Liegt die Anzahl an tatsächlich empfangenen Teile der Datenpakete 4 bzw. der Qualitätsindikator QI unter dem Grenzwert GW, ist eine Änderung des Frequenzkanalmusters 8, 8a-8d notwendig. Hierzu wird zunächst eine Überprüfung der Übertragungsqualität der Teile der Datenpakete 4 auf den entsprechenden Frequenzkanälen K1-Kn des einzustellenden Frequenzkanalmusters 8, 8a-8d gemäß dem Ablaufplan in Fig. 10 durchgeführt. Demzufolge wird eine Überprüfung des Frequenzkanalmusters 8, 8a-8d vorgenommen, bevor ein Wechsel zu diesem Frequenzkanalmuster 8, 8a-8d erfolgt. Liegt die hierbei ermittelte Anzahl an erwarteten ungestörten Teile der Datenpakete 4 über dem Grenzwert GW (z. B. 99 % / Bit 1 und 1 % / Bit 0) kann das jeweilige Frequenzkanalmuster 8, 8a-8d beispielsweise vom Sender und/oder Empfänger ausgewählt werden. Liegt die ermittelte Anzahl an erwarteten ungestörten Teile der Datenpakete 4 unter dem Grenzwert GW (z. B. 50 % / Bit 1 und 50 % / Bit 0) wird ein neues Frequenzkanalmuster 8, 8a-8d mittels des Ablaufplans gemäß Fig. 10 überprüft und bei entsprechender Übertragungsqualität gegebenenfalls neu ausgewählt. Vorzugsweise wird das Ablaufschema nach Fig. 11 so lange widerholt, bis ein Frequenzkanalmuster 8, 8a-8d ermittelt worden ist, welches eine zumindest ausreichend gute Übertragungsqualität aufweist.

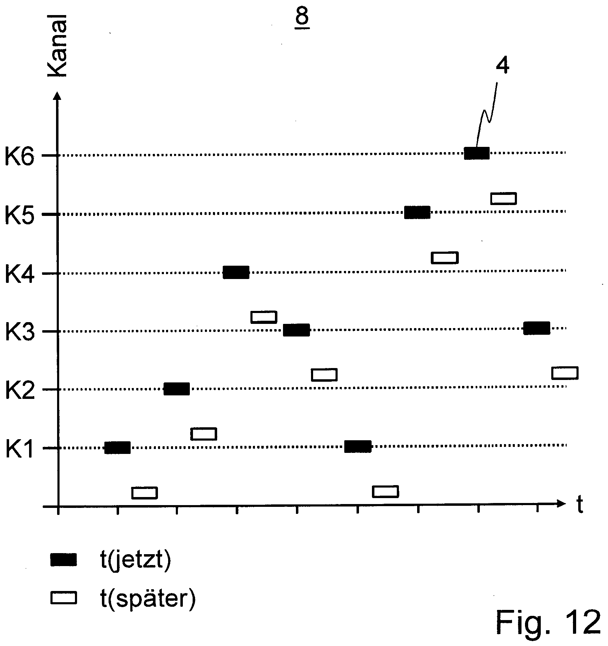

Fig. 12 zeigt eine Datenübertragung bei der sich der Sender und der Empfänger zunächst zum Zeitpunkt t(jetzt) auf das in Fig. 12 mit schwarzen Teilen der Datenpakete 4 markierte Frequenzkanalmuster geeinigt haben, bei dem die Teile der Datenpakete 4 über die Frequenzkanäle K1-K6 in gezeigter zeitlicher Reihenfolge gesendet werden. Aufgrund von Abweichungen der Frequenzreferenzeinrichtungen von Sender und Empfänger, z. B. Verbrauchsmessgerät 2 und Datensammler 1, kann sich das eingestellte Frequenzkanalmuster bzw. die eingestellten Frequenzkanäle jedoch nach einem gewissen Zeitraum zum Zeitpunkt t(später) sender- und empfängerseitig unterscheiden, wie in Fig. 12 anhand der weißen Teile der Datenpakete dargestellt. Beispielsweise kann sich die Sendefrequenz um 5 kHz oder dergleichen verschieben, sodass die Datenübertragung nicht mehr erfolgreich wäre.

Um dieses Problem zu umgehen, kann z. B. der Datensammler 1 den Fehler der Frequenzreferenzeinrichtung des Verbrauchsmessgerätes 2 bei der Auswahl des Frequenzkanals K1-Kn bzw. des Frequenzkanalmusters 8, 8a-8d mit berücksichtigen. Beispielsweise kann der Datensammler 1 den Fehler der Frequenzreferenzeinrichtung des Verbrauchsmessgerätes 2 (z. B. ein Quarzfehler von 5 ppm, 5 kHz oder dergleichen) schätzen und bei der Frequenzkanalauswahl bereits mit einbeziehen.

## BEZUGSZEICHENLISTE

| 1 | Datensammler |
|---|---|
| 2 | Verbrauchsmessgerät |
| 3 | Antenne |
| 4 | Datenpaket |
| 5 | Störung |
| 5a | Frequenz/Zeit-Block |

| 5b | Frequenz/Zeit-Block |
|----|---------------------|
| 5c | Frequenz/Zeit-Block |
| 6 | Änderungssignal |
| 7 | Bestätigungssignal |
| 8 | Frequenzkanalmuster (volle Diversität) |
| 8b | Frequenzkanalmuster (mittenbetont) |
| 8a | Frequenzkanalmuster (randbetont) |
| 8c | Frequenzkanalmuster (im hohen Frequenzbereich) |
| 8d | Frequenzkanalmuster (im niedrigen Frequenzbereich) |
| 10 | Kommunikationsmodul |
| 11 | Wahrscheinlichkeitsquotienten-Kurve |
| 12 | Datenpaketfehlerraten-Kurve |
| 20 | Kommunikationsmodul |

| K1-Kn | Frequenzkanäle |
|-------|----------------|
| WQ | Wahrscheinlichkeitsquotient |
| QI | Qualitätsindikator |
| SL1 | Signalleistung außerhalb der Übertragung der Datenpakete |
| SL2 | Signalleistung während der Übertragung der Datenpakete |
| t | Zeit |
| GW | Grenzwert |
| SW | Schwellenwert |
| DZ | Datenpaketzuverlässigkeit |

**Patentansprüche**

1. Verfahren zur Selektion von Frequenzkanälen (K1-Kn) in einem ein Frequenzsprungverfahren verwendenden Kommunikationssystem, insbesondere zur Verbrauchserfassung von Verbrauchsmessgeräten, bei dem Daten zwischen einem Sender und einem Empfänger mittels Funkübertragung übertragen werden, wobei

   Datenpakete (4) vor dem Senden vom Sender kodiert und nach dem Empfang vom Empfänger dekodiert werden, und **dadurch gekennzeichnet, dass**
   eine Mehrzahl von Frequenzkanalmustern (8, 8a-8d) vorgesehen ist, welche eine jeweils festgelegte Abfolge der Belegung der Frequenzkanäle (K1-Kn) umfassen
   die Übertragungsqualität der Frequenzkanäle (K1-Kn) bewertet wird und anhand der Bewertung der Übertragungsqualität der Frequenzkanäle (K1-Kn) eine Entscheidung für eine Auswahl des Frequenzkanals (K1-Kn) bzw. der Frequenzkanäle (K1-Kn) getroffen wird, der/die zur Übertragung der Daten verwendet wird/werden, indem anhand der Bewertung der Übertragungsqualität des jeweiligen Frequenzkanals (K1-Kn) eine Änderung eines aktuellen Frequenzkanalmusters (8) in ein anderes Frequenzkanalmuster (8a-8d) vorgenommen wird, ein Wahrscheinlichkeitsquotient WQ für die Wahrscheinlichkeit einer erfolgreichen Übertragung vor der Dekodierung durch den Empfänger ermittelt wird,
   der Wahrscheinlichkeitsquotient WQ als Metrik zur Ermittlung des Störungszustandes eines Teils eines Datenpakets (4) herangezogen wird,
   die Bewertung der Übertragungsqualität des jeweiligen Frequenzkanals (K1-Kn) anhand des Störungszustandes des Teils des Datenpakets (4) erfolgt,
   die Daten in Form von mehreren Bits umfassenden Teilen der Datenpakete (4) in einem Frequenz/Zeit-Block übertragen werden, und
   die Übertragung der Teile der Datenpakete (4) über wahlweise mehrere unterschiedliche Frequenzkanäle (K1-Kn) erfolgt.

2. Verfahren nach Anspruch 1, **dadurch gekennzeichnet, dass** der Wahrscheinlichkeitsquotient WQ bitweise oder für eine festgelegte Anzahl an Bits ermittelt wird und die Wahrscheinlichkeitsquotienten WQ der Bits oder der festgelegten Anzahl an Bits als Metrik zur Ermittlung des Störungszustandes des Teils des Datenpakets (4) herangezogen werden.

3. Verfahren nach Anspruch 1 oder 2, **dadurch gekennzeichnet, dass** die Signalleistung SL1 in einem Frequenz/Zeit-Block (5a, 5b, 5c) außerhalb des jeweiligen Teils des Datenpakets (4) und/oder die Signalleistung SL2 in einem Frequenz/Zeit-Block innerhalb des jeweiligen Teils des Datenpakets (4) in dem betreffenden Frequenzkanal (K1-Kn) ermittelt wird bzw. werden, die Signalleistungen SL1 und SL2 zueinander in Relation gesetzt werden und die Signalleistungen SL1 und/oder SL2 und/oder die Relation zwischen den Signalleistungen SL1 und SL2 zur Feinjustierung des Wahrscheinlichkeitsquotienten WQ herangezogen werden.

4. Verfahren nach Anspruch 2 oder 3, **dadurch gekennzeichnet, dass** ein Mittelwert der Wahrscheinlichkeitsquotienten WQ der Bits als Metrik zur Ermittlung des Störungszustandes des Teils des Datenpakets (4) dient.

5. Verfahren nach Anspruch 4, **dadurch gekennzeichnet, dass** der Störungszustand des Teils des Datenpakets (4) als prozentualer Wert oder als Dezimalangabe oder als binärer Zahlenausdruck angegeben wird.

6. Verfahren nach mindestens einem der vorhergehenden Ansprüche, **dadurch gekennzeichnet, dass** ein Schwellenwert SW für den Störungszustand des Teils des Datenpakets (4) festgelegt wird und die Bewertung der Übertragungsqualität des jeweiligen Frequenzkanals (K1-Kn) anhand des Schwellenwertes SW erfolgt.

7. Verfahren nach Anspruch 1, **dadurch gekennzeichnet, dass** ein Algorithmus vorgesehen ist, anhand dessen der Sender ein Frequenzkanalmuster (8, 8a-8d) wählt, welches dem Empfänger vor oder mit der Übertragung der Daten mitgeteilt wird.

8. Verfahren nach mindestens einem der vorhergehenden Ansprüche, **dadurch gekennzeichnet, dass** vom Sender ein Änderungssignal (6) erzeugt wird, welches vom Empfänger mittels eines Bestätigungssignals (7) an den Sender bestätigt werden muss, um eine Änderung des Frequenzkanals (K1-Kn) oder des Frequenzkanalmusters (8, 8a-8d) zu ermöglichen.

9. Verfahren nach Anspruch 8, **dadurch gekennzeichnet, dass** das Bestätigungssignal (7) ein vom Empfänger vorgeschlagenes Frequenzkanalmuster (8, 8a-8d) umfasst oder in dem vorgeschlagenen Frequenzkanalmuster (8, 8a-8d) gesendet wird, wobei das vorgeschlagene Frequenzkanalmuster (8, 8a-8d) anschließend vom Sender überprüft wird und anhand der Überprüfung vom Sender abgelehnt oder angenommen wird.

10. Verfahren nach mindestens einem der vorhergehenden Ansprüche, **dadurch gekennzeichnet, dass** eine Abtastung der Frequenzkanäle (K1-Kn) erfolgt, indem ein erster Teil der Bits eines Datenpakets (4) über bestimmte Frequenzkanäle (K1-Kn) ohne Frequenzkanaländerung übermittelt wird und ein zweiter Teil der Bits auf andere Frequenzkanäle (K1-Kn) verschoben wird, um die Übertragungsqualität dieser Frequenzkanäle (K1-Kn) zu ermitteln.

11. Verfahren nach mindestens einem der vorhergehenden Ansprüche, **dadurch gekennzeichnet, dass** eine Bewertung der Übertragungsqualität eines Frequenzkanals (K1-Kn) anhand der Übertragungsqualität anderer Frequenzkanäle (K1-Kn) bzw. des Störungszustandes eines Teils des Datenpakets (4), welcher über einen anderen Frequenzkanal (K1-Kn) übertragen wurde, durch Interpolation erfolgt.

12. Verfahren nach mindestens einem der vorhergehenden Ansprüche, **dadurch gekennzeichnet, dass** der Sender und/oder der Empfänger eine Frequenzreferenzeinrichtung zum Festlegen der Frequenz umfasst, wobei die Frequenzreferenzeinrichtung eine Frequenzabweichung aufweist und die Frequenzabweichung zur Auswahl des Frequenzkanals (K1-Kn) bzw. der Frequenzkanäle (K1-Kn) und/oder des Frequenzkanalmusters (8a-8d) herangezogen wird.

13. Verfahren nach mindestens einem der vorhergehenden Ansprüche, **gekennzeichnet durch** folgenden Verfahrensschritt:

   - Mitteilung des gewählten Frequenzkanals (K1-Kn) vom Empfänger zum Sender.

14. Verfahren nach mindestens einem der Ansprüche 1 bis 12,
   **gekennzeichnet durch** folgenden Verfahrensschritt:

   - Mitteilung des gewählten Frequenzkanalmusters (8a-8d) vom Empfänger zum Sender.

15. Verfahren nach Anspruch 12,
   **gekennzeichnet durch** folgende Verfahrensschritte:

- Schätzen der Frequenzabweichung der Frequenzreferenzeinrichtung des Senders durch den Empfänger, und

Auswahl eines Frequenzkanalmusters (8,8a-8d) anhand der Frequenzabweichung.

**16.** Verfahren nach mindestens einem der vorhergehenden Ansprüche **dadurch gekennzeichnet, dass** ein Speicher zum Speichern der Bewertungen der Übertragungsqualität eines Frequenzkanals (K1-Kn) vorgesehen ist und die Auswahl des Frequenzkanals (K1-Kn) bzw. der Frequenzkanäle (K1-Kn) und/oder des Frequenzkanalmusters (8a-8d) zusätzlich anhand der gespeicherten Bewertungen erfolgt.

**17.** Verfahren nach Anspruch 1, **dadurch gekennzeichnet, dass** anhand der Bewertung der Übertragungsqualität der Frequenzkanäle (K1-Kn) ein Qualitätsindikator QI ermittelt wird, der zur Bewertungen des jeweiligen Frequenzkanalmusters (8, 8a-8d) herangezogen wird.

**18.** Verfahren nach mindestens einem der vorhergehenden Ansprüche **dadurch gekennzeichnet, dass** es sich bei dem Sender und/oder Empfänger um ein Verbrauchsmessgerät zur Verbrauchsdatenerfassung oder einen Datensammler zum Sammeln der Verbrauchsdaten handelt.

**19.** Verfahren nach mindestens einem der vorhergehenden Ansprüche **dadurch gekennzeichnet, dass** es sich bei dem Sender um eine Vorrichtung zum Ermitteln des Füllstandes handelt.

## Claims

**1.** Method for selecting frequency channels (K1-Kn) in a communication system using a frequency hopping method, in particular for the consumption recording of consumption metering devices, in which data are transmitted between a transmitter and a receiver by means of radio transmission, wherein

data packets (4) are coded before transmission by the transmitter and are decoded after reception by the receiver, and **characterized in that**
a plurality of frequency channel patterns (8, 8a-8d) are provided and comprise a respectively defined sequence of the occupancy of the frequency channels (K1-Kn),
the transmission quality of the frequency channels (K1-Kn) is evaluated and, on the basis of the evaluation of the transmission quality of the frequency channels (K1-Kn), a decision is made in respect of a selection of the frequency channel (K1-Kn) or frequency channels (K1-Kn) which is/are used to transmit the data by changing from a current frequency channel pattern (8) to a different frequency channel pattern (8a-8d) on the basis of the evaluation of the transmission quality of the respective frequency channel (K1-Kn),
a likelihood quotient WQ for the likelihood of a successful transmission is determined before the decoding by the receiver,
the likelihood quotient WQ is used as a metric for determining the interference state of a part of a data packet (4),
the transmission quality of the respective frequency channel (K1-Kn) is evaluated on the basis of the interference state of the part of the data packet (4),
the data are transmitted in the form of parts of the data packets (4) comprising a plurality of bits in a frequency/time block, and
the parts of the data packets (4) are transmitted electively via a plurality of different frequency channels (K1-Kn).

**2.** Method according to Claim 1, **characterized in that** the likelihood quotient WQ is determined bit-by-bit or for a defined number of bits and the likelihood quotients WQ of the bits or of the defined number of bits are used as a metric for determining the interference state of the part of the data packet (4).

**3.** Method according to Claim 1 or 2, **characterized in that** the signal power SL1 in a frequency/time block (5a, 5b, 5c) outside the respective part of the data packet (4) and/or the signal power SL2 in a frequency/time block within the respective part of the data packet (4) is/are determined in the relevant frequency channel (K1-Kn), the signal powers SL1 and SL2 are placed in relation to one another, and
the signal powers SL1 and/or SL2 and/or the relation between the signal powers SL1 and SL2 is/are used to fine-tune the likelihood quotient WQ.

**4.** Method according to Claim 2 or 3, **characterized in that** a mean value of the likelihood quotients WQ of the bits serves as a metric for determining the interference state of the part of the data packet (4).

**5.** Method according to Claim 4, **characterized in that** the interference state of the part of the data packet (4) is indicated as a percentage value or as a decimal indication or as a binary numerical expression.

**6.** Method according to at least one of the preceding claims, **characterized in that** a threshold value SW is defined for the interference state of the part of the data packet (4) and the transmission quality of the respective frequency channel (K1-Kn) is evaluated on the basis of the threshold value SW.

**7.** Method according to Claim 1, **characterized in that** an algorithm is provided, on the basis of which the transmitter chooses a frequency channel pattern (8, 8a-8d) which is communicated to the receiver before or with the transmission of the data.

**8.** Method according to at least one of the preceding claims, **characterized in that** a change signal (6) is generated by the transmitter, said change signal having to be acknowledged by the receiver by means of an acknowledgement signal (7) to the transmitter in order to enable a change of the frequency channel (K1-Kn) or of the frequency channel pattern (8, 8a-8d).

**9.** Method according to Claim 8, **characterized in that** the acknowledgement signal (7) comprises a frequency channel pattern (8, 8a-8d) proposed by the receiver or is transmitted in the proposed frequency channel pattern (8, 8a-8d), wherein the proposed frequency channel pattern (8, 8a-8d) is then verified by the transmitter and is rejected or accepted by the transmitter on the basis of the verification.

**10.** Method according to at least one of the preceding claims, **characterized in that** the frequency channels (K1-Kn) are sampled by transmitting a first part of the bits of a data packet (4) via specific frequency channels (K1-Kn) without a frequency channel change and moving a second part of the bits to other frequency channels (K1-Kn) in order to determine the transmission quality of these frequency channels (K1-Kn).

**11.** Method according to at least one of the preceding claims, **characterized in that** the transmission quality of one frequency channel (K1-Kn) is evaluated by means of interpolation on the basis of the transmission quality of other frequency channels (K1-Kn) or the interference state of a part of the data packet (4) which has been transmitted via a different frequency channel (K1-Kn).

**12.** Method according to at least one of the preceding claims, **characterized in that** the transmitter and/or the receiver comprise(s) a frequency reference device to define the frequency, wherein the frequency reference device has a frequency deviation and the frequency deviation is used to select the frequency channel (K1-Kn) or frequency channels (K1-Kn) and/or the frequency channel pattern (8a-8d).

**13.** Method according to at least one of the preceding claims, **characterized by** the following method step:

- communicating the selected frequency channel (K1-Kn) from the receiver to the transmitter.

**14.** Method according to at least one of Claims 1 to 12, **characterized by** the following method step:

- communicating the selected frequency channel pattern (8a-8d) from the receiver to the transmitter.

**15.** Method according to Claim 12, **characterized by** the following method steps:

- estimating the frequency deviation of the frequency reference device of the transmitter by the receiver, and

selecting a frequency channel pattern (8, 8a-8d) on the basis of the frequency deviation.

**16.** Method according to at least one of the preceding claims, **characterized in that** a memory is provided to store the evaluations of the transmission quality of a frequency channel (K1-Kn), and the frequency channel (K1-Kn) or the frequency channels (K1-Kn) and/or the frequency channel pattern (8a-8d) is/are additionally selected on the basis of the stored evaluations.

**17.** Method according to Claim 1, **characterized in that** a quality indicator QI which is used to evaluate the respective frequency channel pattern (8, 8a-8d) is determined on the basis of the evaluation of the transmission quality of the frequency channels (K1-Kn).

18. Method according to at least one of the preceding claims, **characterized in that** the transmitter and/or receiver is/are a consumption metering device to record the consumption data or a data collector to collect the consumption data.

19. Method according to at least one of the preceding claims, **characterized in that** the transmitter is an apparatus for determining the content level.


**Revendications**

1. Procédé de sélection de canaux de fréquence (K1-Kn) dans un système de communication utilisant un procédé de saut de fréquence, notamment pour que des appareils de mesure de consommation détectent la consommation, procédé dans lequel des données sont transmises entre un émetteur et un récepteur au moyen d'une transmission radio,

   des paquets de données (4) étant codés avant l'émission par l'émetteur et décodés après réception par le récepteur, et **caractérisé en ce que**
   une pluralité de modèles de canaux de fréquence (8, 8a-8d) sont prévus qui comprennent chacun une séquence à chaque fois définie de l'occupation des canaux de fréquence (K1-Kn),
   la qualité de transmission des canaux de fréquence (K1-Kn) est évaluée et sur la base de l'évaluation de la qualité de transmission des canaux de fréquence (K1-Kn), une décision est prise quant à la sélection du canal de fréquence (K1-Kn) ou des canaux de fréquence (K1-Kn) à utiliser pour la transmission des données par changement d'un modèle de canal de fréquence actuel (8) en un autre modèle de canal de fréquence (8a-8d) sur la base de l'évaluation de la qualité de transmission du canal de fréquence respectif (K1-Kn),
   un quotient de probabilité WQ pour la probabilité d'une transmission réussie est déterminé avant le décodage par le récepteur,
   le quotient de probabilité WQ est utilisé comme métrique pour déterminer l'état de dysfonctionnement d'une partie d'un paquet de données (4),
   l'évaluation de la qualité de transmission du canal de fréquence respectif (K1-Kn) est effectuée sur la base de l'état de dysfonctionnement de la partie du paquet de données (4),
   les données sont transmises sous la forme de parties de paquets de données (4), comprenant plusieurs bits, dans un bloc fréquence/temps, et
   la transmission des parties de paquets de données (4) est effectuée par le biais d'éventuellement plusieurs canaux de fréquence différents (K1-Kn).

2. Procédé selon la revendication 1, **caractérisé en ce que** le quotient de probabilité WQ est déterminé bit à bit ou pour un nombre défini de bits et le quotient de probabilité WQ des bits ou du nombre défini de bits est utilisé comme métrique pour déterminer l'état de dysfonctionnement de la partie du paquet de données (4).

3. Procédé selon la revendication 1 ou 2, **caractérisé en ce que** la puissance de signal SL1 dans un bloc fréquence/temps (5a, 5b, 5c) à l'extérieur de la partie respective du paquet de données (4) et/ou la puissance de signal SL2 dans un bloc fréquence/temps à l'intérieur de la partie respective du paquet de données (4) sont déterminés dans le canal de fréquence concerné (K1-Kn), les puissances de signal SL1 et SL2 sont liées l'une à l'autre et les puissances de signal SL1 et/ou SL2 et/ou la relation entre les puissances de signal SL1 et SL2 sont utilisées pour effectuer un réglage fin du quotient de probabilité WQ.

4. Procédé selon la revendication 2 ou 3, **caractérisé en ce qu'**une valeur moyenne du quotient de probabilité WQ des bits est utilisée comme métrique pour déterminer l'état de dysfonctionnement de la partie du paquet de données (4).

5. Procédé selon la revendication 4, **caractérisé en ce que** l'état de dysfonctionnement de la partie du paquet de données (4) est indiqué sous la forme d'une valeur en pourcentage ou sous la forme d'une valeur décimale ou sous la forme d'une expression numérique binaire.

6. Procédé selon l'une au moins des revendications précédentes, **caractérisé en ce qu'**une valeur seuil SW de l'état de dysfonctionnement de la partie du paquet de données (4) est définie et la qualité de transmission du canal de fréquence respectif (K1-Kn) est évaluée à l'aide de la valeur seuil SW.

**7.** Procédé selon la revendication 1, **caractérisé en ce qu'**un algorithme est prévu qui permet à l'émetteur de choisir un modèle de canal de fréquence (8, 8a-8d) qui est communiqué au récepteur avant ou pendant la transmission des données.

**8.** Procédé selon l'une au moins des revendications précédentes, **caractérisé en ce que** l'émetteur génère un signal de changement (6) qui doit être confirmé à l'émetteur par le récepteur au moyen d'un signal de confirmation (7) afin de changer le canal de fréquence (K1-Kn) ou le modèle de canal de fréquence (8, 8a-8d).

**9.** Procédé selon la revendication 8, **caractérisé en ce que** le signal de confirmation (7) comprend un modèle de canal de fréquence (8, 8a-8d) proposé par le récepteur ou est transmis dans le modèle de canal de fréquence proposé (8, 8a-8d), le modèle de canal de fréquence proposé (8, 8a-8d) étant ensuite vérifié par l'émetteur et rejeté ou accepté sur la base de la vérification par l'expéditeur.

**10.** Procédé selon l'une au moins des revendications précédentes, **caractérisé en ce que** le balayage des canaux de fréquence (K1-Kn) est effectué par transmission d'une première partie des bits d'un paquet de données (4) sur des canaux de fréquence déterminés (K1-Kn) sans changer de canal de fréquence et une deuxième partie des bits est décalée vers d'autres canaux de fréquence (K1-Kn) afin de déterminer la qualité de transmission de ces canaux de fréquence (K1-Kn).

**11.** Procédé selon l'une au moins des revendications précédentes, **caractérisé en ce qu'**une évaluation de la qualité de transmission d'un canal de fréquence (K1-Kn) est effectuée par interpolation sur la base de la qualité de transmission d'autres canaux de fréquence (K1-Kn) ou de l'état de dysfonctionnement d'une partie du paquet de données (4) qui a été transmise sur un autre canal de fréquence (K1-Kn).

**12.** Procédé selon l'une au moins des revendications précédentes, **caractérisé en ce que** l'émetteur et/ou le récepteur comprend un module de référence de fréquence destiné à définir la fréquence, le module de référence de fréquence comportant un écart de fréquence et l'écart de fréquence étant utilisé pour sélectionner le canal de fréquence (K1-Kn) ou les canaux de fréquence (K1-Kn) et/ou le modèle de canal de fréquence (8a-8d).

**13.** Procédé selon l'une au moins des revendications précédentes, **caractérisé par** l'étape de procédé suivante :

- communication du canal de fréquence sélectionné (K1-Kn) par le récepteur à l'émetteur.

**14.** Procédé selon l'une au moins des revendications 1 à 12, **caractérisé par** l'étape de procédé suivante :

- communication du modèle de canal de fréquence sélectionné (8a-8d) par le récepteur à l'émetteur.

**15.** Procédé selon la revendication 12, **caractérisé par** les étapes de procédé suivantes :

- estimation, par le récepteur, de l'écart de fréquence du module de référence de fréquence de l'émetteur, et
- sélection d'un modèle de canal de fréquence (8, 8a-8d) sur la base de l'écart de fréquence.

**16.** Procédé selon l'une au moins des revendications précédentes, **caractérisé en ce qu'**une mémoire est prévue pour mémoriser les évaluations de la qualité de transmission d'un canal de fréquence (K1-Kn) et la sélection du canal de fréquence (K1-Kn) ou des canaux de fréquence (K1-Kn) et/ou du modèle de canal de fréquence (8a-8d) est en plus effectuée sur la base des évaluations mémorisées.

**17.** Procédé selon la revendication 1, **caractérisé en ce qu'**un indicateur de qualité QI, qui est utilisé pour évaluer le modèle de canal de fréquence respectif (8, 8a-8d), est déterminé sur la base de l'évaluation de la qualité de transmission des canaux de fréquence (K1-Kn).

**18.** Procédé selon l'une au moins des revendications précédentes, **caractérisé en ce que** l'émetteur et/ou le récepteur est un appareil de mesure de consommation destiné à acquérir des données de consommation ou un collecteur de données destiné à collecter des données de consommation.

**19.** Procédé selon l'une au moins des revendications précédentes, **caractérisé en ce que** l'émetteur est un dispositif de détermination du niveau de remplissage.

Fig. 1

4

SL1 {  } SL2

t

5a

Fig. 2

4

SL1 {  } SL2

t

5b

Fig. 3

Fig. 4

Fig. 5

Fig. 6

Fig. 7

Fig. 8

Fig. 9

```
        ┌─────────────────────────┐
        │      Datenpaket         │
        │      kommt an           │
        └────────────┬────────────┘
                     │
                     ▼
        ┌─────────────────────────┐
        │     Ermitteln des       │
        │    Signal-zu-Rausch-    │
        │      Verhältnisses      │
        └────────────┬────────────┘
                     │
                     ▼
        ┌─────────────────────────┐
        │  bitweises Ermitteln des│
        │   Wahrscheinlichkeits-  │
        │      quotienten WQ      │
        └────────────┬────────────┘
                     │
                     ▼
        ┌─────────────────────────┐
        │    Definieren eines     │
        │    Schwellenwerts SW    │
        │   für Störungszustand   │
        │     des Datenpakets     │
        └────────────┬────────────┘
                     │
                     ▼
        ┌─────────────────────────┐
        │     Bestimmen des       │
        │  Störungszustandes des  │
        │       Datenpakets       │
        └────────────┬────────────┘
                     │
                     ▼
                   ◇─────────◇
      ┌─nein─┐    ◇ Störungszustand ◇    ┌─ja─┐
      │      │    ◇     > SW?        ◇    │    │
      ▼      └────◇─────────◇─────────────┘    ▼
┌──────────────┐                      ┌──────────────┐
│ ungestörtes  │                      │ ungestörtes  │
│Datenpaket(Bit 0 =│                  │Datenpaket(Bit 1 =│
│ (ungestört -1)│                     │ (ungestört +1)│
└──────┬───────┘                      └──────┬───────┘
       └───────────────┬─────────────────────┘
                       ▼
```

Fig. 10

Definieren eines Grenzwertes GW für die Anzahl empfangener ungestörter Datenpakete bzw. für den Qualitätsindikator QI

ungestörte Datenpakete / QI > GW?

ja

nein

Änderung notwendig, wähle nächstes Frequenzkanalmuster

keine Änderung notwendig, Frequenzkanalmuster wird nicht verändert

Ablaufplan 1

fertig

nein

erwartete ungestörte Datenpakete / QI > GW?

ja

Frequenzkanal-muster vom Datensammler anfordern

fertig

Fig. 11

Fig. 12

**IN DER BESCHREIBUNG AUFGEFÜHRTE DOKUMENTE**

**In der Beschreibung aufgeführte Patentdokumente**

- US 8958456 B2
- US 20060013172 A1
- EP 2642706 A1
- DE 10320176 B3
- US 20020136268 A1
- US 20060133543 A1
- DE 102013008253 A1

**In der Beschreibung aufgeführte Nicht-Patentliteratur**

- Burst-byburst adaptive wideband wireless video telephony. **HANZO L et al.** COMMUNICATIONS AND VEHICULAR TECHNOLOGY, 2000. SCVT-200. SYMPOSIUM ON OCT 19, 2000, PISCATAWAY, NJ, USA. IEEE, 01. Januar 2000, 215-232
- **RAO S.** Implementing a Bidirectional Frequency Hopping application with TRF6903 and MSP430. *Texas Instrument,* September 2004